# EUROPEAN PATENT SPECIFICATION

(11) **EP 4 317 793 B1**
(45) Date of publication and mention of the grant of the patent: **21.10.2026**
(21) Application number: 23189205.0
(22) Date of filing: 02.08.2023
(51) Int. Cl.: F24C 7/08, F24C 15/00

(54) **COOKING APPLIANCE**
GARGERÄT
APPAREIL DE CUISSON

(30) Priority: 02.08.2022 KR 20220096377
(43) Date of publication of application: 07.02.2024
(73) Proprietor: LG Electronics Inc., Yeongdeungpo-gu Seoul 07336 (KR)
(72) Inventor: Jang, Seungtae, Seoul 08592 (KR); Choi, Moon Ho, Seoul 08592 (KR)
(74) Representative: Ter Meer und Partner mbB

(56) References cited:
- EP-A1- 3 594 573
- EP-A2- 2 518 413
- WO-A1-2018/084462
- CN-U- 206 251 501
- DE-A1- 102012 224 033
- US-A1- 2018 070 757

## Description

### TECHNICAL FIELD

The present disclosure relates to a cooking appliance, and in particular, a cooking appliance provided with a door for opening and closing a cooking space.

### BACKGROUND

Cooking appliances are installed in the kitchen and used to cook food items as the user wants. Cooking appliances can fall into different categories, based on a heat source or a type, and the sort of fuel.

Additionally, cooking appliances can be categorized into an open cooking appliance in which a food item is placed in an open space, and a sealed cooking appliance in which a food item is placed in a closed space, based on a way of cooking a food item. The sealed cooking appliance comprises an oven, a microwave oven and the like, and the open cooking appliance comprises a cooktop, a hob and the like.

In the sealed cooking appliance, a space in which a food item is placed is shielded, and the shielded space is heated to cook the food item. The sealed cooking appliance is provided with a cooking space in which a food item is placed and which is shielded when a food item is cooked. The cooking space is a space in which a food item is substantially cooked.

Sealed cooking appliances are categorized into gas ovens and electric ovens based on the type of a heat source.

Gas ovens use gas as a fuel and cook a food item by using flames that are generated by supplying gas to a burner and igniting the burner.

Unlike gas ovens, electric ovens use electricity as a heat source and cook a food item by using heat that is emitted from a heater.

In recent years, steam ovens have come on the market and cook a food item by using high-temperature steam.

Steam ovens spray high-temperature steam into a cooking space, and adjust humidity based on an amount of the steam, preventing a food item from drying and cooking a large amount of food in stages.

Additionally, steam ovens can provide a variety of functions such as a function of blocking taste and flavor of food from evaporating and a function of maintaining taste and flavor of cooked food and the like.

Ordinarily, a steam oven comprises a cabinet forming the exterior of the steam oven, a cavity being disposed in the cabinet and forming a cooking space, a door opening and closing the front opening of the cooking space, and a steam supplier supplying steam into the cooking space.

The steam supplier can comprise a steam generator generating steam, and a water supplier supplying water to the steam generator.

A water supply pipe connects between the water supplier and the steam generator, to allow water in a water tank to move to the steam generator. The steam generator comprises a water storage that accommodates water supplied from the water supplier, and a heater that heats the water in the water storage and generates steam.

In the steam oven described above, water injected through the water supplier flows into the water storage through the water supply pipe, the water having flown into the water storage is heated by the heater to generate steam, and the generated steam flows into the cooking space and circulates in the cooking space, to cook a food item.

**In** the steam oven described above, the water supplier can be disposed in an electronic component space that is a space formed on the cooking space.

The water supplier can be provided in a way that the water supplier is drawn to the front of the electronic component space. The water supplier can comprise a housing and a water tank.

The housing is fixed to the electronic component space. The housing has an accommodation space therein, the accommodation space accommodating the water tank, and the front surface of the housing is open forward.

The water tank is installed in the housing in a way that the water tank can move in the accommodation space of the housing in the front-rear direction. The water tank can be drawn to the font of the electronic component space.

A front panel can be provided at the front of the cavity. The front panel can be disposed at the front of the cavity and form the exterior of the front surface of the steam oven. The front panel can form the exterior of the front surface of the steam oven while shielding the front edge area of the cavity.

A portion of the front panel can extend upward above the cavity, and be disposed at the front of the electronic component space. At this time, a portion of the front panel, disposed at the front of the electronic component space, covers the electronic component space from the front of the electronic component space.

The front panel formed as described above can form the exterior of the front surface of the steam oven, which is exposed as the door opens the cooking space. The front panel can form the exterior of the front surface of the steam oven while shielding the front edge area of the cavity and the electronic component space from the front thereof.

The steam oven may be further provided with a control panel for displaying the operation adjustment and the operation state of the steam oven. The control panel may be disposed above the door closing the cooking space.

The water tank can pass through the front panel disposed at the front of the electronic component space and be drawn to the front of the electronic component space. To this end, the front panel has an open hole that forms a passage through which the water tank passes. The open hole is disposed in an area between the cooking space and the control panel.

The open hole is exposed in the state where the door opens the cooking space, and the open hole is not exposed in the state where the door closes the cooking space. Thus, in the state where the door opens the cooking space, the water tank can be drawn, and in the state where the door closes the cooking space, the open hole and the water tank are not exposed outward.

In the case of a steam oven that has a size less than that of the steam oven structured as described above, i.e., a steam oven that has a cooking space of capacity less than that of the steam oven structured as described above or a steam oven that has an entire size less than that of the steam oven structured as described above while having the same capacity as that of the steam oven structured as described above, a distance between the cooking space and the control panel can be less than that of the steam oven structured as described above.

In the stem oven (hereafter, "a medium-and-small-sized steam oven), a space for installing the water supplier is hardly ensured between the cavity in which the cooking space is formed, and the control panel.

For the water supplier to be disposed between the cooking space and the control panel, a sufficient gap between the upper surface of the cavity and the control panel needs to be ensured in the up-down direction. However, it is difficult to ensure the gap in a small-and-medium-sized steam oven. To ensure such a gap in a small-and-medium-sized steam oven, the small-and-medium-sized steam oven can have an excessively long up-down length, compared to the entire size of the small-and-medium-sized steam oven.

In the small-and-medium-sized steam oven, the control panel serves as a cover covering the electronic component space from the front of the electronic component space, instead of the front panel. Accordingly, the water supplier, in particular, the water tank, is disposed in an area behind the control panel.

In the case where the water tank is disposed in the area behind the control panel as described above, an access hole may be formed on the control panel and form a passage through which the water tank passes.

Since the access hole formed on the control panel is exposed to the outside of the steam oven constantly, the access hole can degrade the aesthetic qualities of the steam oven.

A home appliance comprising a movable control panel is disclosed in prior art document 1 (EP Patent No. 3080517).

According to prior art document 1, a storage space accommodating components of the home appliance is disposed at the upper side of the home appliance. The control panel is disposed at the upper side of a door, and covers the front surface of the storage space.

The control panel is provided in a way that moves in the up-down direction. In the state where the control panel is moved upward, the storage space can be accessed in an unlimited manner. Accordingly, a tank can readily be removed from the storage space or inserted into the storage space.

In the state where the control panel is moved downward, the front surface of the storage space is covered by the control panel, and access to the storage space and the tank inserted into the storage space are limited.

According to prior art document 1, the path of movement of the control panel can be divided into a first path and a second path. Between a closing position in which the control panel closes the storage space and an opening position in which the control panel opens the storage space totally, the first path is a lower section comprising the closing position, and the second path is an upper section between the end of the first path and the opening position.

In the first path, the control panel can be moved by a moving device comprising a driving motor. In the second path, a motor driving force is not applied to the control panel, and the control panel is moved based on the user's manipulation.

Thus, the control panel moves automatically in the first path, and then moves manually in the second path, such that the storage space of the control panel is open.

According to prior art document 1, the storage space opened and closed by the control panel is not open completely. An automatic movement of the control panel can lead to a partial opening of the storage space. To open the storage space completely, the user needs to perform a manual manipulation additionally to move up the control panel manually.

That is, for the home appliance of prior art document 1, the control panel needs to be manipulated manually to ensure access to the tank, causing inconvenience to the user.

The control panel is disposed very close the upper end of the door. In the case where a manual manipulation is performed in this position to move up the control panel manually, the user is likely to be burned due to hear discharged from the upper end of the door and an area around the upper end of the door.

That is, for the home appliance of prior art document 1, the control panel needs to be manipulated manually to ensure access to the tank, causing inconvenience to the user and increasing the risk of injuries of the user.

According to prior art document 1, the control panel moves upward to open the storage space. The control panel moved upward is placed between the user's eyes and the tank. The control panel disposed as describe above may become an obstacle that covers the tank from the user's sight.

Accordingly, in the process of drawing or inserting the tank, the tank is not seen well, causing inconvenience to the user, and the user needs to bend such the user's eye level is placed under the control panel.

Further, a home appliance comprising a movable control panel is disclosed in prior art document 2 (US Patent No. 2010-0206414).

According to prior art document 2, the control panel is disposed near the upper end of the home appliance and provided in a way that moves between a stop position and an exposure position. A storage container shaped into a water drawer is disposed at the rear of the control panel, in the home appliance.

In the case where the control panel is in the stop position, the storage container at the rear of the control panel is covered by the control panel and not seen.

The control panel can move in the up-down direction and move between the stop position and the exposure position. The control panel can move upward from the stop position to the exposure position.

In the state where the control panel is moved to the exposure position as described above, the storage container can be exposed forward at the lower side of the control panel. In the case where the storage container is exposed forward as described above, it is possible to access the storage container for charge of water.

According to prior art document 2, the control panel can move automatically. That is, the control panel can automatically move from the stop position to the exposure position and from the exposure position to the stop position.

Like the control panel of prior art document 1, the control panel of prior art document 2 moves upward and exposes the storage container forward.

Thus, according to prior art document 2, in the process of drawing or inserting the tank, the tank is not seen well, causing inconvenience to the user, and the user needs to bend such the user's eye level is placed under the control panel.

According to prior art document 2, even though the control panel moves automatically, the user needs to perform a manual manipulation to hold and draw the storage container.

However, since the process of drawing the storage container is performed very close to the upper end of the door, the user is likely to be burned due to heat discharged from the upper end of the door and an area around the upper end of the door in the process of drawing the storage container.

EP 3 594 573 A1 presents household appliance with a tilt-down control panel, comprising a housing for the control panel, an electronic control configured to receive instructions from the control panel, an oblong cam located besides the housing, a pin between the oblong cam and the control panel, a hinge system configured to provide a non-circular movement to the control panel and a latching system configured to maintain the control panel within the housing; where the oblong cam receives instructions from the electronic control and rotates, pushing the pin which in turn is configured to push the control panel and release the control panel of the latching system, such that the control panel, when released from the latching system, rotates around the hinge system.

CN 206 251 501 U provides a turn over and canceling release mechanical system on domestic appliance's control panel, including control panel assembly, the fixed bolster, including a motor, an end cap, a controller, and a cover plate, gear drive and link mechanism.

WO 2018/084462 A1 presents a cooking appliance. The cooking appliance comprises: a body including a cooking chamber and a machine chamber; a control panel configured to open and close the machine chamber; a water tank unit configured to be withdrawn from the machine chamber with the opening of the machine chamber by the control panel; and a guide unit for guiding the movement of the water tank unit at least in a partial section in a direction different from a direction in which the control panel moves, upon the withdrawal of the water tank unit.

US 2018/070757 A1 presents a cooking apparatus that includes a first space where cooking is performed, a second space partitioned from the first space and having components configured to control an internal environment of the first space, a water supply device provided to supply steam to the first space, and a controller configured to control the water supply device to be inserted into or withdrawn from the second space.

EP 2 518 413 A2 presents a steam cooking apparatus including a body, a cooking compartment, a steam generator to supply steam into the cooking compartment, a water vessel to store water and supply the water into the steam generator, a water supply device including a holder and a slider slidably mounted in the holder so as to be withdrawn from the body, a first water supply tube connecting the slider and the water vessel, a second water supply tube connecting the water vessel and the steam generator, and a drain tube to drain water in the steam generator to the outside of the body. The drain tube includes an end fixed to the slider so that the end of the drain tube is withdrawn with the slider from the body when water in the steam generator is drained to the outside.

### SUMMARY

### Technical Problems

An object of the present disclosure is to provide a cooking appliance that ensures improvement in the opening and closing structure of a control panel, to prevent the control panel from serving as an obstacle that blocks a water tank, while the water tank is drawn or inserted.

Another object of the present disclosure is to ensure an automatic opening of the control panel simply based on an additional configuration/an additional component.

Yet another object of the present disclosure is to enable the control panel to help to improve safety at a time when the water tank is drawn or inserted.

### Technical Solutions

One or more of the objects are solved by the invention set out by the features of the independent claim. Preferred embodiments are given in the dependent claims.

According to an aspect of the present disclosure, in the cooking appliance, the control panel may be disposed at the front of the electronic component space, and may be unfolded forward while swiveling forward.

According to another aspect of the present disclosure, the control panel opening and closing the front surface of the electronic component space may open the front surface of the electronic component space while swiveling downward, and may open the front surface of the electronic component space while being unfolded forward.

According to another aspect of the present disclosure, the control panel opening and closing the front surface of the electronic component space may swivel around the lower end of the control panel.

According to yet another aspect of the present disclosure, the second front panel may be disposed at the upper side of the first front panel disposed at the front of the cooking space, and disposed at the front of the electronic component space disposed at the upper side of the cooking space, the exit of the water tank coming into and out of the electronic component space may be formed on the second front panel, and the control panel may be disposed at the front of the second front panel.

The control panel disposed at the front of the second front panel may open the exit of the water tank forward while swiveling downward and being unfolded forward.

The cooking appliance according to a first aspect of the present disclosure comprises: a cavity having a cooking space therein, the cooking space having an open front; a door being disposed at a front of the cavity, and opening and closing the cooking space; an electronic component space being disposed at an upper side of the cooking space; and a control panel being disposed at a front of the electronic component space, and swiveling (or pivoting or swinging) downward (or downward and forward) and being unfolded forward.

The cooking appliance according to a second aspect of the present disclosure comprises: a main body having a cooking space therein, the cooking space having an open front; a door being disposed at a front of the main body cavity, and configured to open and close the cooking space; an electronic component space separated from the cooking space and disposed above the cooking space; and a control panel disposed at a front of the electronic component space, and wherein the control panel (or a upper side or upper end of the control panel) is configured to swivel forward and downward from a closed position at which the control panel covers the front of the electronic component space (for example in a forward-rearward or front-rear direction) to an open position at which the control panel uncovers the front of the electronic component space (for example in a forward-rearward or front-rear direction).

In/at the closed position the control panel blocks access (for example of a user) to the front of the electronic component space or to the electronic component space from the front of the electronic component space/cooking appliance.

In/at the closed position the control panel overlaps (partially or completely) the front of the electronic component space in the forward rearward direction.

An angle (say a first angle) between the control panel and the front (a front surface or a vertical front surface) of the electronic component space in/at the closed position is smaller than an angle (say a second angle) between the control panel and the front (a front surface or a vertical front surface) of the electronic component space in/at the open position.

As an example, the control panel (or a rear surface of the control panel) and the front (a front surface or a vertical front surface) of the electronic component space in/at the closed position may be parallel to each other.

As an example, the control panel (or a rear surface of the control panel) and the front (a front surface or a vertical front surface) of the electronic component space in/at the open position may be perpendicular to each other, or may form an angle thereinbetween equal to or greater than 90 degree.

A distance (say a first distance) between an upper side or an upper end the control panel and the electronic component space in/at the closed position is smaller than a distance (say a second distance) between the control panel and the electronic component space in/at the open position.

In/at the open position the control panel unblocks access (for example of a user) to the front of the electronic component space or to the electronic component space from the front of the electronic component space/cooking appliance.

An overlap between the control panel and the front of the electronic component space in the forward rearward direction in/at the open position is lesser than the overlap between the control panel and the front of the electronic component space in the forward rearward direction in/at the closed position.

As an example, in/at the open position the control panel and the front of the electronic component space may not overlap with each other in the forward rearward direction.

Optionally in addition to swiveling forward and downward, the control panel is configured to swivel upward and rearward from the open position to the closed position.

An axis of swiveling may be disposed at a lower side or lower end of the control panel.

the control panel may swivel around an axis in a lateral direction, and a swivel center/axis of the control panel may be placed further downward, in an up-down direction, than a center/central axis (central lateral axis) of the control panel.

The swivel center/axis of the control panel may be not overlap with the control panel.

The swivel center/axis of the control panel may be placed further downward, in an up-down direction, than a lower end of the control panel.

The control panel is provided to swivel between a closing (i.e. closed) position in which the control panel blocks/covers the electronic component space and an opening (i.e. open opened) position in which the control panel is unfolded forward.

A rear surface of the control panel may face rearward in/at the closing position, and the rear surface of the control panel may face upward as the control panel swivels to the opening position.

The cooking appliance may further comprise a water tank being disposed in the electronic component space.

The water tank may be provided in a way that the water tank is drawn to the front of the electronic component space.

The control panel may be disposed between the door and the water tank, in the opening position.

The control panel may be disposed between the door and the water tank, in/at the open position of the control panel and when the water tank is in a drawn-out state (in front-rear direction).

The control panel may face a front of the water tank, in/at the closed position and may face a bottom of the water tank, when the water tank is in a drawn-out state (in front-rear direction).

The water tank may be disposed further upward than the control panel swiveled to the opening position.

The cooking appliance may further comprise: a front panel blocking a front of the electronic component space and being disposed between the electronic component space and the control panel.

An access hole may be provided on/in the front panel and forming a passage/hole/port allowing the water tank to pass through the front panel.

The access hole may be placed further upward than the control panel unfolded forward i.e. when the control panel is in the open state.

The cooking appliance further comprises an opening module for pushing the control panel in/from the closing/closed position forward and moving the control panel to or toward the opening position (i.e. an intermediate position between the closed position and the open position).

The control panel may be provided to swivel between the closing position in which the control panel blocks the electronic component space and the opening position in which the control panel is unfolded forward.

A hinge module may support the control panel to allow the control panel to swivel around/about a lower end of the control panel.

The opening module may tilt/incline the control panel from/in/at the closing position forward with a predetermined gradient/tilt/inclination angle, and the predetermined gradient (i.e. tilt or inclination angle) may be a gradient/inclination angle/tilt of the control panel, with which or at which the control panel moves to the opening position by using or under its self weight, i.e. under gravitation pull of its own weight.

The opening module comprises a pushing member being provided rotatably.

The pushing member may be shaped into a cam pushing the control panel forward at least once during one rotation.

The opening module further comprises a sensor sensing a position of the pushing member while contacting at least a portion of the pushing member.

The opening module may further comprise a contact projection which protrudes from the pushing member and a position of which changes while the contact projection rotates together with the pushing member, and the sensor may generate a signal at a time when the sensor contacts the contact projection.

The sensor may be disposed above the pushing member, and the contact projection may protrude upward from the pushing member.

The cooking appliance may further comprise a hinge module supporting the control panel and allowing the control panel to swivel around/about the lower end of the control panel.

The cooking appliance may further comprise a first front panel being disposed between the cavity and the door.

A portion of the first front panel may protrude to/from the upper side of the cavity/main body, and the hinge module may be coupled to at least any one of the cavity/main body and the first front panel.

The hinge module may comprise a hinge part swivably supporting the control panel, and a hinge case accommodating and supporting the hinge part.

The hinge case may be disposed in the electronic component space.

The first front panel may comprise a protruding surface part protruding upward from a lateral end of the first front panel, and a front surface of the hinge case, being disposed at a rear of the protruding surface part, may be coupled to the protruding surface part.

A passage hole may be formed in a way that penetrates the protruding surface part in a front-rear direction, and the hinge part may pass through the protruding surface part through the passage hole.

The cooking appliance may further comprise a second front panel being disposed between the electronic component space and the control panel and blocking the front of the electronic component space.

The second front panel may be coupled to the first front panel.

The second front panel may be coupled to the protruding surface part.

### Advantageous Effects

In the cooking appliance of the present disclosure, the control panel swivels downward and is unfolded forward, such that the control panel having opened the access hole for allowing the water tank to come in and out may be disposed further downward than a path in which the water tank moves.

Accordingly, the control panel does not serve as an obstacle that covers the access hole and the water tank, from the user's sight, such that the access hole (and the water tank) is seen well while the water tank is drawn or inserted.

According to the present disclosure, the user may not need to bend to see the position of the access hole, ensuring improvement in ease of use and safety of the cooking appliance.

According to the present disclosure, the pushing member pushes the control panel with the predetermined gradient, and the opening operation of the control panel is performed by using the self weigh of the control panel, ensuring an automatic opening operation of the control panel simply based on a push of the control panel.

According to the present disclosure, an automatic opening function of the control panel is provided, and management and repairs in relation to the opening and closing structure of the control panel are readily ensured, at low costs.

According to the present disclosure, the control panel having an automatic opening function as described above is provided, causing no inconvenience due to a manual manipulation and reducing the risk of injuries of the user.

According to the present disclosure, the control panel disposed further downward than the path in which the water tank moves supports the water tank from below, and guides the movement path of the water tank, enabling the user to drawn and insert the water tank (320) in a convenient and safe manner.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view showing a cooking appliance in one embodiment;
FIG. 2 is a lateral cross-sectional view showing that the inner structure of the cooking appliance in FIG. 1;
FIG. 3 is a perspective view showing that a cooking space of the cooking appliance in FIG. 1 is open;
FIG. 4 is a perspective view showing that a control panel of the cooking appliance in FIG. 1 is open;
FIG. 5 is a plan view showing the inner structure of an electronic component space of the cooking appliance in FIG. 1;
FIG. 6 is a front exploded perspective view separately showing a control panel and a water supply device of the cooking appliance in one embodiment;
FIG. 7 is a rear exploded perspective view separately showing a second front panel and a housing in FIG. 5;
FIG. 8 is a rear perspective view separately showing the second front panel in FIG. 5;
FIG. 9 is a front perspective view separately showing the housing in FIG. 5;
FIG. 10 is a lateral cross-sectional view showing a coupling structure between the second front panel and the housing in FIG. 5;
FIG. 11 is a lateral cross-sectional view showing a contact structure between the second front panel and a water tank in FIG. 5;
FIG. 12 is a perspective view separately showing an upper panel and a housing of a cooking appliance in one embodiment;
FIG. 13 is a plan view showing a coupling state between the upper panel and the housing in FIG. 11;
FIG. 14 is a side view showing a coupling state between the upper panel and the housing in FIG. 11;
FIG. 15 is an enlarged front view showing the front surface of a water tank that is exposed to the front of a cooking appliance in one embodiment;
FIG. 16 is a cross-sectional view along line " "XVI-XVI" in FIG. 15;
FIG. 17 is a bottom perspective view separately showing a water tank of a cooking appliance in one embodiment;
FIG. 18 is a bottom view showing the water tank in FIG. 17;
FIG. 19 is a front cross-sectional view showing a coupling structure between a housing and water tank in one embodiment;
FIG. 20 is a view showing an operation state of an opening module of a cooking appliance in one embodiment;
FIG. 21 is an enlarged view showing portion "XXI" in FIG. 20;
FIG. 22 is a cross-sectional view along line "XXII-XXII" in FIG. 20;
FIG. 23 is a view showing a rotation state of a push member in FIG. 21;
FIG. 24 is a view showing a change in the gradients of a control panel of a cooking appliance in one embodiment; and
FIG. 25 is a perspective view showing a drawn state of a water tank of a cooking appliance in one embodiment.

### DETAILED DESCRIPTION

The terms "first", "second" and the like are used herein only to distinguish one component from another component. Thus, the components are not to be limited by the terms. Certainly, a first component can be a second component, unless stated to the contrary.

The terms in the disclosure are used only to describe specific embodiments and not intended to limit the subject matter of the disclosure. In the disclosure, singular forms include plural forms as well, unless explicitly indicated otherwise. In the disclosure, the terms "comprise", "being comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as being "connected" or "coupled" to another component, any one component can be directly connected or coupled to another component, but an additional component can be "interposed" between the two components or the two components can be "connected" or "coupled" by an additional component. When any one component is described as "being directly connected" or "being directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

In the state where a cooking appliance stands on the floor e.g. for intended use, a direction in which a door (e.g. door in its closed state) is installed/disposed with respect to a center of the cooking appliance and/or with respect to a cooking space or a center of the cooking space defined in the cooking appliance is referred to as a forward direction. Accordingly, a direction toward an inside of the cooking appliance from with the door (e.g. door in its closed state) is referred to as a rearward direction. For convenience, the forward direction and the rearward direction can be referred to as a first direction or forward-rearward direction (or axis or extension) or an axial (or depth) direction from the door in closed state to an inside of the cooking chamber/space. Then the forward direction is referred to as one side of the first direction, and the rearward direction is referred to as the other side of the first direction.

A gravitational direction or a direction from the cooking chamber/space (vertically downward) towards a floor or surface on which the cooking appliance is installed for use i.e. in upright manner can be defined as a downward direction, and a direction opposite to the gravitational direction can be defined as an upward direction. For convenience, the upward direction and the downward direction can be referred to as a upward-downward direction (or axis or extension) or an vertical direction or up-down direction or height or height direction.

Further, a horizontal direction across a front-rear direction of the cooking appliance, i.e., a widthwise direction of the cooking appliance that is seen from a front of the door of the cooking appliance, can be referred to as a left-right direction or lateral direction or width or width direction. For convenience, the left-right direction can be referred to as a second direction. Then the right side can be referred to as one side of the second direction, and the left side can be referred to as the other/opposite side of the second direction.

Further, the widthwise direction of the cooking appliance can also be referred to as a lateral direction. Then the right side can also be referred to as one side of the lateral direction, and the left side can be referred to the other/opposite side of the lateral direction.

An up-down direction can be referred to as a third direction. Then an upward direction can be referred to as one side of the third direction, and a downward direction can be referred to as the other/opposite side of the third direction.

Furthermore, the up-down direction can be referred to as a vertical direction. Then the front-rear direction and the left-right direction, i.e., the first direction and the second direction, can be referred to as a horizontal direction.

The first direction, the second direction and the third direction may be mutually perpendicular i.e. the first direction is perpendicular to each of the second and the third directions, the second direction is perpendicular to each of the first and the third directions, and the third direction is perpendicular to each of the first and the second directions. Similarly, the vertical direction, the lateral direction and the axial direction may be mutually perpendicular.

### [Entire structure of cooking appliance]

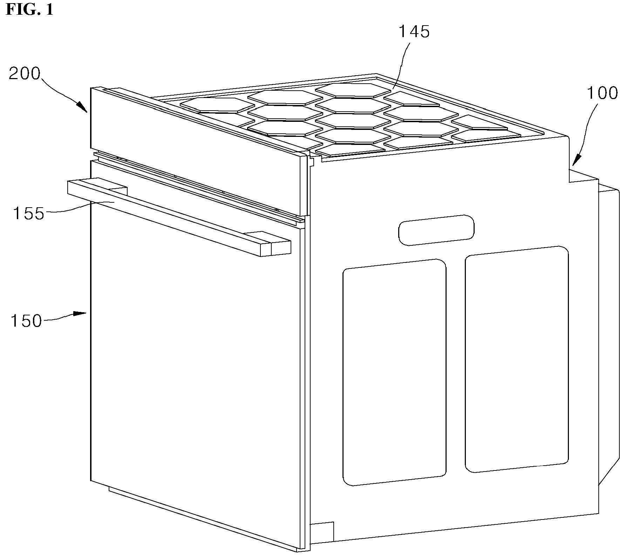

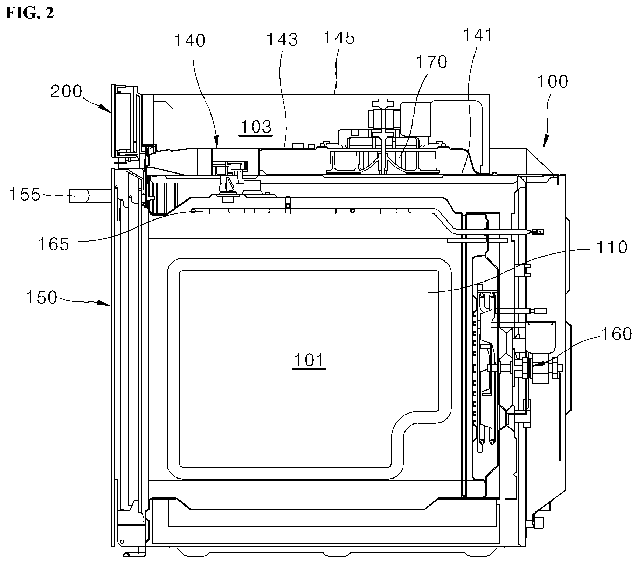

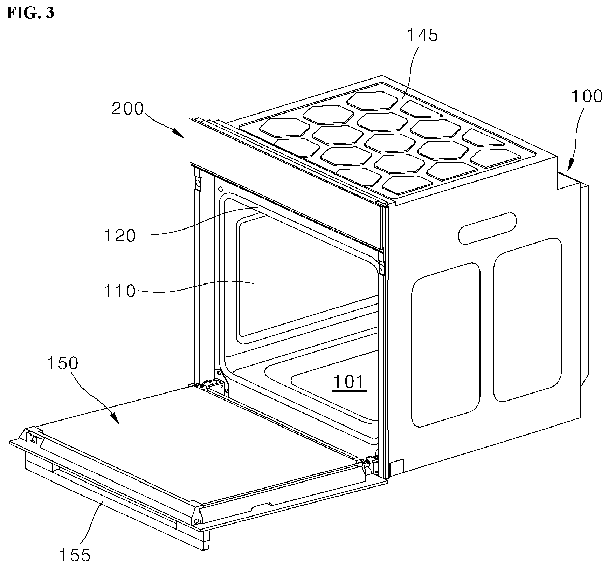

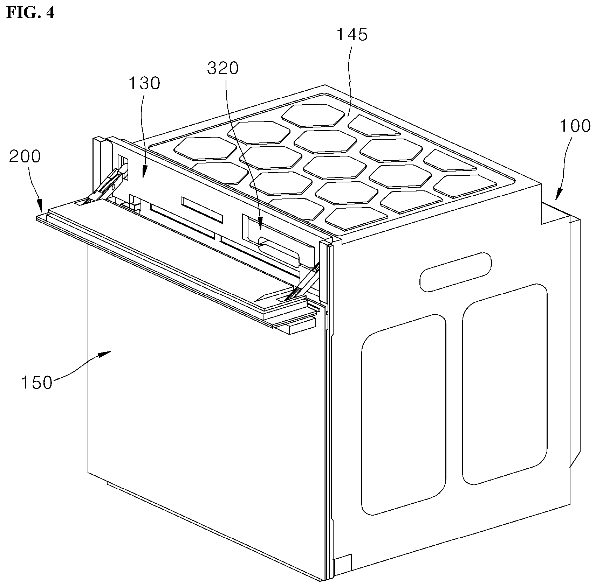

FIG. 1 is a perspective view showing a cooking appliance in one embodiment, and FIG. 2 is a lateral cross-sectional view showing the inner structure of the cooking appliance in FIG. 1. FIG. 3 is a perspective view showing that a cooking space of the cooking appliance in FIG. 1 is open, and FIG. 4 is a perspective view showing that a control panel of the cooking appliance in FIG. 1 is open.

Referring to FIGS. 1 to 3, the exterior of the cooking appliance may formed by a main body 100. The main body 100 may have a shape comprising, but not limited to, an approximate rectangle shape or box shape. The main body 100 may be made of a material of predetermined strength, to protect a plurality of parts that is installed in the inner space of the main body 100.

The main body 100 may comprise a cavity 110 or surfaces/structure that define a cavity 110. The cavity 110 may form the skeleton/core/inside of the main body 110.

The main body 100 may further comprise one or more of front panels 120, 130, including a first front panel 120.

The first front panel 120 may be disposed between the cavity 110 and a door 150. The first front panel 120 may be disposed at the front of the cavity 110 and form the front surface of the main body 100. The first front panel 120 may be define the cavity 110 at a front surface or front side or front of the cavity 110.

In another example, the first front panel 120 is not provided (i.e. apart from the cavity 110), and the front surface of the cavity 110 may form the front surface of the main body 100.

For example, the cavity 110 and the first front panel 120 may be integrally provided at the main body 100.

A cooking space 101 may be formed in the cavity 110.

An open part or opening 126 may be formed in the first front panel 120, and open the cooking space 101 forward.

The cooking space 101 may have a cuboid shape the front surface of which is open. In the state where the cooking space 101 is closed, the cooking appliance heats the inner space of the cooking space 101 to cook a food item. That is, in the cooking appliance, a food item is substantially cooked in the inner space of the cooking space 101.

The cooking appliance may be provided with a heating part that heats the cooking space 101. As an example of the heating part, a convection part 160 may be provided at the rear of the cooking space 101, and perform convection of hot air and heat the inner space of the cooking space 101.

An upper heater 165 or an upper burner may be provided as the heating part at the supper side of the cooking space 11 and heat the inner space of the cooking space 101 from above. Further, a lower heater or a lower burner may be provided as the heating part at the lower side of the cooking space 101 and heat the inner space of the cooking space 101 from below.

The door 150 may be swivably/rotatably provided at the front of the main body 100 and open and close the cooking space 101 selectively. The door 150 may open and close the cooking space 101 in a pull-down manner, i.e., in a way that the upper end of the door 150 swivels up and down around/about the lower end of the door 150.

The door 150 may be shaped into a cuboid that has a predetermined thickness entirely.

A handle or holding space 155 may be provided on the front surface of the door 150, such that the user grips the handle 150 when the user swivels the door 150.

The door 150 may be provided with a see-through window. The see-through window may be made of a transparent material, e.g., glass, transparent plastics and the like. In the case of a cooking appliance to which a see-through window is applied, the see-through window may resist high temperature and high pressure, and may have a water resistant function, a heat resistant function and the like

An electronic component space 103 may be provided outside the cavity 110, specifically, at the upper side of or above the cavity 110. The electronic component space 103 may be disposed at the upper sides of the cavity 110 and the cooking space 101 formed in the cavity 110. A space for installing electronic components is formed in the electronic component space 103.

The front surface of the electronic component space 103 may be shielded by the front panels 120, 130. A second front panel 130 may be provided as one of the front panels 120, 130.

The second front panel 130 may block, or cover or overlap (when viewed in front-rear direction) or completely overlap, the front of the electronic component space 103, and be disposed between the electronic component space 103 and the control panel 200.

In an example, the second front panel 130 may be disposed at the upper side of the first front panel 120, and coupled to the first front panel 120. Optionally at least a part of or entire second front panel 130 is arranged to overlap with the first front panel 120 at the upper side of the first front panel 120), and coupled to the first front panel 120. Alternatively, the second front panel 130 and the first front panel 120, may be flush with each other or may be integrally formed.

The second front panel 130 may protrude to the upper portion of the cavity 110 and define a front surface or front boundary surface of the electronic component space 103. Optionally, most of the front of the electronic component space 103 (i.e. more than fifty percent of an area of the front surface of the electronic component space 103) is blocked by the second front panel 130.

A portion of the front of the electronic component space 103, i.e., a portion of the lower side of the electronic component space 103, may be blocked by the first front panel 120.

Further, the front panels 120, 130 may be provided with one or more exhaust opening(s) 122. In the embodiment, the exhaust opening 122 is provided at the first front panel 120.

The exhaust opening 122 may be formed in a way that penetrates the first front panel 120 in the front-rear direction. The exhaust opening 122 may form a passage enabling air in the electronic component space 103 to pass through the front panel 120 and be discharged out of the electronic component space 103.

In another example, the front panel 120 is not provided apart from the cavity 110, and the front surface of the cavity 110 may form the front surface of the main body 100. At this time, the exhaust opening 122 may be provided on the front surface of the cavity 110 that has a shape corresponding to the shape of the front panel 120.

A control panel 200 may be provided in the upper portion of the front surface of the cooking appliance, i.e., on the front surface of the upper portion of the cavity 110. The control panel 200 may form a portion of the exterior of the front surface of the cooking appliance.

The control panel 200 is disposed at the front of the electronic component space 103.

The control panel 200 may be disposed at the front of the second front panel 130.

The control panel 200, as illustrated in FIGS. 3 and 4, is provided to open and close the electronic component space 103. The control panel 200 is provided to swivel between a closing position (or close position or closed position or folded-in position) where the control panel 200 blocks or covers the electronic component space 103 and/or the second front panel 130 at a forward or front side of the electronic component space 103 and/or the second front panel 130, and an opening position (or open position or opened position or un-folded position) where the control panel 200 uncovers or unblocks or opens the electronic component space 103 and/or the second front panel 130 at the forward or front side of the electronic component space 103 and/or the second front panel 130.

The swivel structure of the control panel 200 is described below.

The control panel 200 may be provided with a display part. The display part may comprise an input part for adjusting the operation of the cooking appliance, and a display displaying the operation state of the cooking appliance.

In an example, the input part and the display may be formed by one panel. For example, the input part and the display may be formed into a touch panel that is supplied with a touch input of the user.

The display part may display a user interface (UI) or a graphical user interface (GUI) in relation to the operation of the cooking appliance.

For example, a button for setting the operation of the heating part may be displayed on the display part.

A button for setting the opening and closing operation of the control panel 200 may be displayed on the display.

[Inner structure of electronic component space]

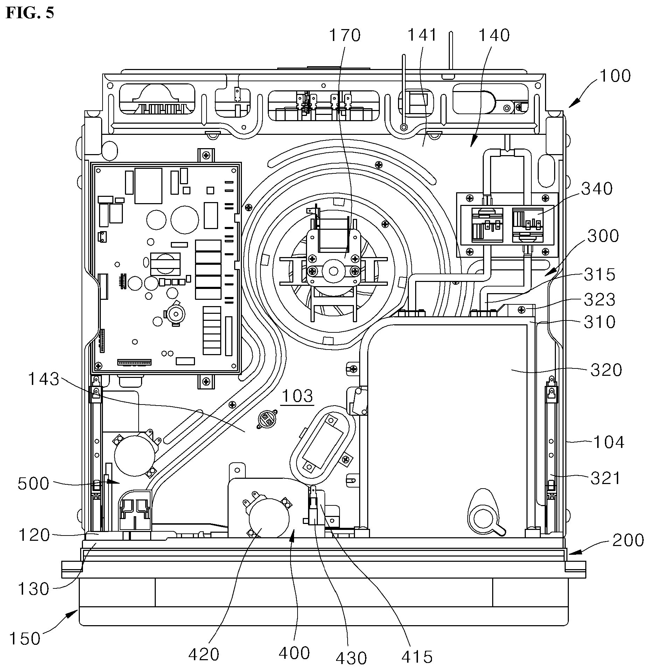

FIG. 5 is a plan view showing the inner structure of an electronic component space of the cooking appliance in FIG. 1.

Referring to FIGS. 2 to 5, the lower boundary surface of the electronic component space 103 may be defined by an upper panel 140 that is disposed at the upper side of the cavity 110.

The upper boundary surface of the electronic component space 103 may be defined by an electronic component space cover 145 that covers the electronic component space 103 from above.

Further, the electronic component space's 103 lateral and rear boundary surfaces may be defined by the electronic component space cover's 145 both lateral surfaces and rear surface, or defined by the cavity's 110 both lateral surfaces protruding to the upper portion of the cooking space 101 and the rear surface of the electronic component space's 145 rear surface protruding to the upper portion of the cooking space 101.

A vent hole may be formed on at least one of the electronic component space cover's 145 both lateral surfaces and rear surface, and the cavity's 110 both lateral surfaces. Through the vent hole, external air may flow into the electronic component space 103.

Various types of electronic components may be disposed in the electronic component space 103, as described above. A circuit board may be disposed in the electronic component space 103. The circuit board may be provided with various types of elements, circuits and the like in relation to the receipt of a manipulation signal input through the control panel 200, the generation of a control signal for controlling the operation of the heating part, and the like.

The upper panel 140 may comprise a blocking panel part 141 and a duct part 143.

The blocking panel part 141 may be disposed to block between the cavity 110 and the electronic component space 103. The blocking panel 141 may be disposed at the upper side of the cavity 110 and define the lower boundary surface of the electronic component space 103.

The duct part 143 may be formed to protrude upward from the blocking panel part 141. The duct part 143 may form a passage for discharging air in the electronic component space 103 out of the electronic component space 103 through the inside of the duct part 143. That is, the duct part 143 may form a passage allowing air suctioned by a fan module 170 described hereafter to flow to the exhaust opening 122.

The fan module 170 may be disposed in the electronic component space 103. The fan module 170 may be disposed at a side adjacent to the rear surface of the cavity 110, i.e., may be disposed in a position eccentric to the rear of the electronic component space 103, in the electronic component space 103.

The fan module 170 may comprise a turbo fan that is installed in the electronic component space 103. The fan module 170 may suction external air through the rear of the electronic component space 103 and discharge the air to the front of the electronic component space 103.

Based on the operation of the fan module 170, external air may flow into the electronic component space 103 from the rear and sides of the cooking appliance.

For example, external air drawn through the lower portion of the main body 100 may pass through the rear of the cooking appliance, and then flow into the electronic component space 103 through the vent hole formed at the rear of the electronic component space 103.

External air may also flow into the electronic component space 103 through the vent hole formed at the sides of the electronic component space 103.

The air having flown into the electronic component space 103 may cool the electronic components in the electronic component space 103 while moving forward in the electronic component space 103.

The air having flown into the electronic component space 103 may be suctioned into the duct part 143 by the fan module 170. The air having flown into the duct part 143 may move forward in the duct part 143, and then be discharged to the front of the electronic component space 103 through the exhaust opening 122.

As illustrated in FIG. 5, a water supply device 300 may be disposed in the electronic component space 103. The water supply device 300 may provide water needed/required to generate steam in a steam supply device (not illustrated), to the steam supply device.

The steam supply device heats water to generate steam, such that steam generated by the steam supply device may be provided into the cooking space 101 through a steam nozzle.

### [Structure of water supply device]

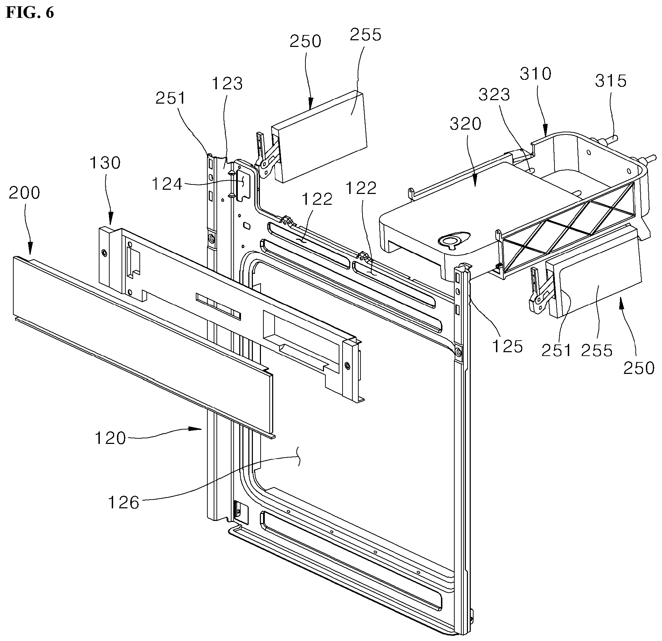

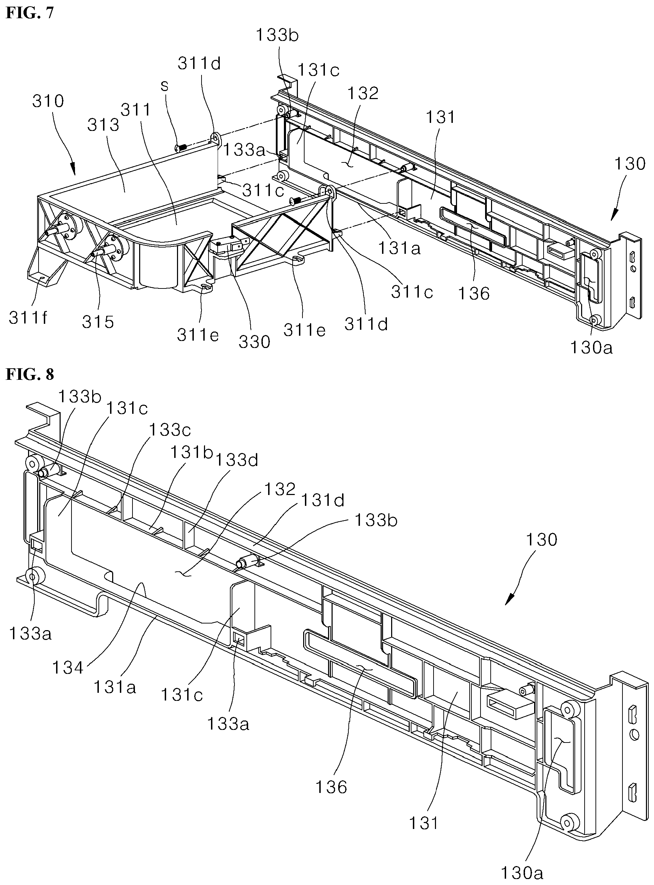

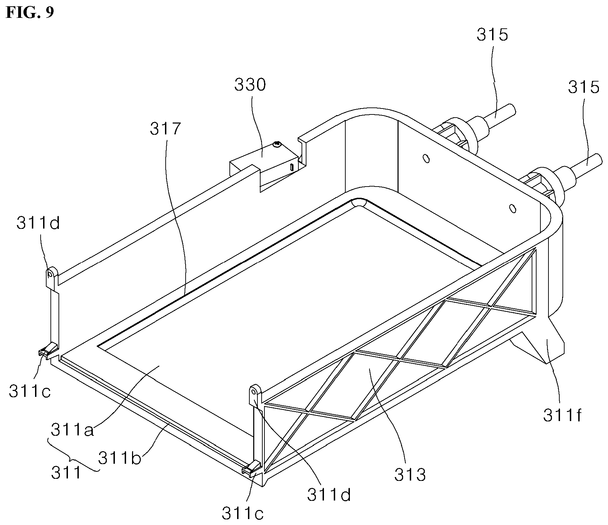

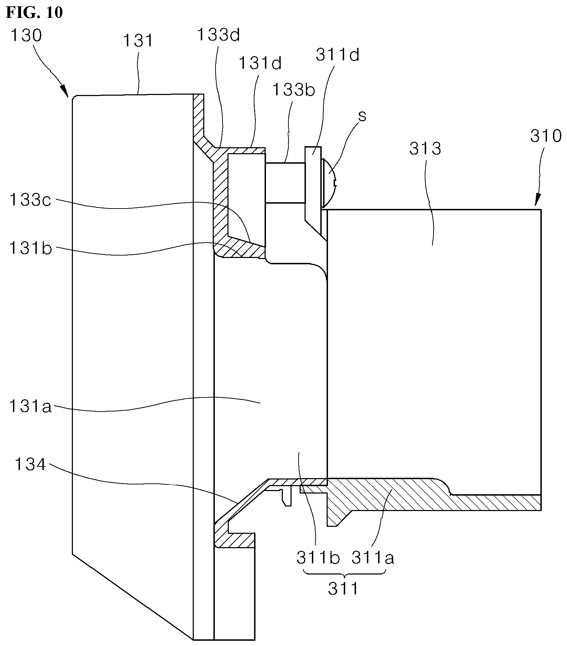

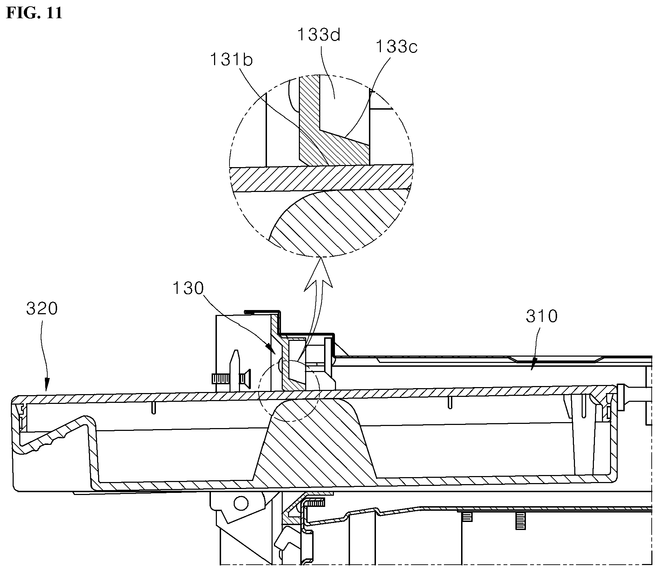

FIG. 6 is a front exploded perspective view separately showing a control panel and a water supply device of the cooking appliance in one embodiment, and FIG. 7 is a rear exploded perspective view separately showing a second front panel and a housing in FIG. 5. FIG. 8 is a rear perspective view separately showing the second front panel in FIG. 5, and FIG. 9 is a front perspective view separately showing the housing in FIG. 5. Further, FIG. 10 is a lateral cross-sectional view showing a coupling structure between the second front panel and the housing in FIG. 5, and FIG. 11 is a lateral cross-sectional view showing a contact structure between the second front panel and a water tank in FIG. 5.

Referring to FIGS. 5 to 7, the water supply device 300 may comprise a housing 310 and a water tank 320. The housing 310 may be fixed to the inside of the electronic component space 103, and the water tank 320 may be movably/drawably accommodated in the housing 310 for example may be drawn or moved to and fro in the front and rear direction.

In an example, the housing 310 may be disposed at the upper side of the upper panel 140.

The water tank 320 may be accommodated in the housing 310 in a way that the water tank 320 can move in the front-rear direction i.e. can be drawn in and out of the housing 310 and consequently can be drawn in and out of the electronic component space 103.

The water tank 320 may pass through the front panels 120, 130 in the electronic component space 103 and be withdrawn from/through/via the front of the cooking appliance.

The water tank 320 may pass through the second front panel 130 in the electronic component space 103 and be withdrawn from the front of the cooking appliance.

In the state where the control panel 200 blocks the fronts of the electronic component space 103 and the second front panel 130, the water tank 320 may not be exposed and withdrawn forward. The water tank 320 may pass through the second front panel 130 and be withdrawn from the front of the cooking appliance only in the state where the control panel 200 opens the electronic component space 103 and the second front panel 130 forward.

The water tank 320 may accommodate water therein. The water tank 320 may be provided with an injection opening. Water may be injected into the water tank 320 through the injection opening, and the injection opening may be opened and closed by a stopper 321.

Each of the water tank 320 and the housing 310 may be provided with a nozzle 315, 323. The water accommodated in the water tank 320 may be discharged out of the water tank 320 through the nozzle 323. The nozzle 323 of the water tank 320 may connect to the nozzle 315 of the housing 310, in the case where the water tank 320 is inserted into the housing 310.

The nozzle 315 of the housing 310 may connect to a pump 340 disposed at the rears of the water tank 320 and the housing 310, in the electronic component space 103. The pump 340 may connect to the water tank 320 through the nozzles 315, 323 that connect to each other, and pump the water accommodated in the water tank 320. The pump 304 may supply the water accommodated in the water tank 320 to the steam supply device.

The water supply device 300 may further comprise a water tank sensing part 330. The water tank sensing part 330 may be provided to sense the position of the water tank 320. For example, the water tank sensing part 330 may be provided to sense whether the water tank 320 is completely inserted into the housing 310 or whether the water tank 320 is withdrawn from the housing 310.

In the embodiment, the water tank sensing part 330 comprises a microswitch, for example. The water tank sensing part 330 may be turned on (ON)/turned off (OFF) based on the movement of an actuator that protrudes on the microswitch.

In an example, the water tank sensing part 330 may be disposed in the side portion of the housing 310. The actuator of the water tank sensing part 330 may be disposed in a way that the actuator protrudes to the inside of the housing 310 toward the water tank 320.

At this time, the water tank sensing part 330 may sense the position of the water tank 320 in a way that the water tank sensing part 330 is turned on/off based on the movement of the water tank 320.

### [Coupling structure between second front panel and housing]

The second front panel 130 may be disposed between the electronic component space 103 and the control panel 200. The second front panel 130 may be disposed to block the front of the electronic component space 103.

The water tank 320 may be disposed at the rear of the second front panel 130. The second front panel 130 may be provided with an access hole 132. The access hole 132 may be formed in a way that penetrates the second front panel 130 in the front-rear direction. The water tank 320 may pass through the second front panel 130 through the access hole 132.

The second front panel 130 may be disposed at the upper side of the first front panel 120, and coupled to the first front panel 120. The first front panel 120 may comprise protruding surface parts 123, 125 that protrude upward from a lateral end of the first front panel 120, and the second front panel 130 may be coupled to the protruding surface parts 123, 125.

The protruding surface parts 123, 125 may be respectively disposed at both sides of the first front panel 120 in the lateral direction thereof. That is, a pair of protruding surface parts 123, 125 may be spaced from each other in the lateral direction, with the open part 126 therebetween.

The second front panel 130 may be disposed between the pair of protruding surface parts 123, 125 and coupled to each of the pair of protruding surface parts 123, 125.

In an example, the first front panel 120 may be formed in a way that the upper ends of both sides of the first front panel 120 protrude upward, i.e., may have a " 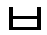 " shape. The second front panel 130 may be disposed between the protruding upper ends of both sides of the first front panel 120. The end portions of both sides of the second front panel 130 may be respectively coupled to the protruding end portions of both sides of the first front panel 120.

Referring to FIGS. 5 to 8, the second front panel 130 may comprise a panel main body part 131. The panel main body part 131 may comprise a vertically planar surface that blocks the front of the electronic component space 103.

In an example, the panel main body part 131 may have an approximate rectangle shape. The panel main body part 131 may be formed to have a vertically planar surface that extends in the lateral direction.

The second front panel 130 may be provided with an access hole 132. The access hole 132 may be formed in a way that penetrates the panel main body part 131 in the front-rear direction.

A first inner wall part 131a, a second inner wall part 131b and a pair of third inner wall parts 131c may be provide around the access hole 132.

The first inner wall part 131a is disposed at the lower side of the access hole 132, and the second inner wall part 131b is disposed at the upper side of the access hole 132.

The third inner wall parts 131c are disposed respectively in both lateral portions of the access hole 132.

That is, the first inner wall part 131a may define the lower boundary surface of the access hole 132, and the second inner wall part 131b may define the upper boundary surface of the access hole 132. The third inner wall part 131c may define the lateral boundary surface of the access hole 132.

Further, the first inner wall part 131a, the second inner wall part 131b, and the third inner wall part 131c may respectively protrude rearward from the panel main body part 131. The first inner wall part 131a, the second inner wall part 131b, and the third inner wall part 131c may respectively comprise a planar surface that extends in the front-rear direction.

For example, the first inner wall part 131a and the second inner wall part 131b may have a shape comprising a horizontally planar surface that extends in the front-rear direction. The third inner wall part 131c may have a shape comprising a vertically planar surface that extends in the front-rear direction.

The first inner wall part 131a, the second inner wall part 131b, and the third inner wall part 131c may be disposed on the path in which the water tank 320 moves. Accordingly, the inner surface of each of the first inner wall part 131a, the second inner wall part 131b and the third inner wall part 131c, which faces the outer surface of the water tank 320, may be shaped into a planar surface parallel with the outer surface of the water tank 320.

The housing 310 accommodating the water tank 320 may be disposed at the rear of the second front panel 130. The housing 310 may be disposed in the electronic component space 103, and coupled to the second front panel 130.

The housing 310, as illustrated in FIGS. 7 to 9, may have a front surface that is open. The housing 310 may be coupled to the second front panel 130 in a way that the open front surface of the housing 310 connects to the access hole 132.

The housing 310 may have an upper surface that is open. The housing 310 may be shaped into a cuboid the front surface and the upper surface of which are approximately open, and comprise a bottom surface part 311, and a pair of lateral surface parts 313.

The bottom surface part 311 may form the bottom surface of the housing 310, and be disposed at the lower side of the water tank 320.

The lateral surface part 313 may form the lateral surface of the housing 310, and connect to the bottom surface part 311. The pair of lateral surface parts 313 may extend upward from the end portions of both sides of the bottom surface part 311, and each of the lateral surface parts 313 may be disposed in the lateral potion of the water tank 320.

Referring to FIGS. 7 to 10, the housing 310 and the second front panel 130 may be coupled while the front surface of the housing 310 contacts the rear surface of the second front panel 130. In the case where the housing 310 is coupled to the second front panel 130, at least a portion of the bottom surface part 311 may overlap the second front panel 130 in the up-down direction.

In the embodiment, the bottom surface part 311 comprises a support surface 311a and an overlap surface 311b, for example. The support surface 311a is disposed at the lower side of the water tank 320, and occupies most of the area of the bottom surface part 311. The overlap surface 311b may protrude forward from the support surface 311a.

At a time of coupling between the housing 310 and the second front panel 130, the overlap surface 311b may be disposed to protrude to the second front panel 130. At a time of coupling between the housing 310 and the second front panel 130, the overlap surface 311b may be disposed to overlap the bottom surface of the second front panel 130 in the up-down direction.

The housing 310 may be coupled to the second front panel 130 while the end portion of the front of the housing 310 contacts the rear surface of the second front panel 130. In an example, the housing 310 and the second front panel 130 may be coupled in the state where the end portions of the fronts of the bottom surface part 311 and the lateral surface parts 313 contact the end portions of the rears of the first inner wall part 131a and the third inner wall part 131c.

The overlap surface 311b may be disposed at the lower side of the support surface 311a, and a step may be formed between the overlap surface 311b and the support surface 311a. At a time of coupling between the housing 310 and the second front panel 130, the overlap surface 311b may be disposed at the lower side of the bottom surface of the second front panel 130.

In the embodiment, the first inner wall part 131a forms a portion of the bottom surface of the second front panel 130, for example. Accordingly, the first inner wall part 131a may form the bottom surface of the second front panel 130, in the lower area of the access hole 132.

Thus, at a time of coupling between the housing 310 and the second front panel 130, the overlap surface 311b may be disposed at the lower side of the first inner wall part 131a, and closely contact the bottom surface of the first inner wall part 131 a, i.e., the bottom surface of the second front panel 130.

In the state where the overlap surface 311b contacts the bottom surface of the first inner wall part 131a closely as described above, the support surface 311a may connect to the first inner wall part 131a in the front-rear direction.

Preferably, at a time when the coupling between the housing 310 and the second front panel 130 is completed, the support surface 311a and the upper surface of the first inner wall part 131a may form the same planar surface.

To this end, while a step is formed between the overlap surface 311b and the support surface 311a, the step may have a height corresponding to the thickness of the first inner wall part 131a. Accordingly, the support surface 311a and the upper surface of the first inner wall part 131a may connect smoothly in the form of an identical planar surface.

The water tank 320 may slide the support surface 311a and the upper surface of the first inner wall part 131a and pass through the access hole 132.

The water tank 320 may pass though the access hole 132 while passing through a connection portion between the support surface 311a and the upper surface of the first inner wall part 131a.

Since the support surface 311a and the upper surface of the first inner wall part 131a connect smoothly in the form of an identical planar surface, the water tank 320 may move smoothly through the access hole 132.

In the embodiment, the support surface 311a and the first inner wall part 131a may connect to each other while the end portion of the front of the support surface 311a and the end portion of the rear of the first inner wall part 131a contact each other. The overlap surface 311b may wrap the connection portion between the support surface 311a and the first inner wall part 131a from below.

That is, the overlap surface 311b may block a gap of the connection portion between the support surface 311a and the first inner wall part 131a from below.

The support surface 311a and the first inner wall part 131a are a structure that is disposed in the section where the water tank 320 moves and supports the water tank 320 from below. The water tank 320 accommodates water.

In terms of the support surface 311a and the first inner wall part 131a that are disposed in the section where the water tank 320 accommodating water moves, water is likely to flow in the connection portion between the support surface 311a and the first inner wall part 131a.

In the case where water flowing in the connection portion between the support surface 311a and the first inner wall part 131a flows downward through the gap between the support surface 311a and the first inner wall part 131a, the water may contaminate the inside of the electronic component space 103 or the perimeter of the upper end of the door.

The water may flow downward along the first front panel 120 and contaminate the perimeter of the lower side of the cooking appliance.

In the embodiment, the gap may be blocked by the overlap surface 311b that wraps the connection portion between the support surface 311a and the first inner wall part 131a from below. Accordingly, the leakage of water through a gap between the second front panel 130 and the housing 310, and the contamination of the cooling appliance caused by the leakage of water may be prevented effectively.

Further, the overlap surface 311b may guide the position of the housing 310 relative to the second front panel 130, in the process where the second front panel 130 and the housing 310 are coupled. For example, the position where the overlap surface 311b contacts the bottom surface of the first inner wall part 131a may be the up-down position of the housing 310 for coupling the housing 310 to the second front panel 130.

Further, the front-rear position of the housing 310 relative to the second front panel 130 may be guided by the support surface 311a. For example, the position where the end portion of the front of the support surface 311a contacts the end portion of the rear of the first inner wall part 131a may be the front-rear position of the housing 310 for coupling the housing 310 to the second front panel 130.

That is, the front-rear position of the housing 310 for coupling the housing 310 to the second front panel 130 may be guided by the end portion of the front of the support surface 311a, contacting the end portion of the rear of the second inner wall part 131b, and the up-down position of the housing 310 for coupling the housing 310 to the second front panel 130 may be guided by the overlap surface 311b contacting the bottom surface of the first inner wall part 131a.

A first front coupling part 311c and a second front coupling part 311d may be provided on the lateral surface parts 313 of the housing 310. The first front coupling part 311c and the second front coupling part 311d may protrude forward from the end portion of the front of the lateral surface part 313.

The second front panel 130 may be provided with a fitting coupling part 133a, and a fixing coupling part 133b. The fitting coupling part 133a and the fixing coupling part 133b may be provided on the rear surface of the second front panel 130 in a protruding manner.

In the embodiment, the first front coupling part 311c and the second front coupling part 311d may be respectively provided on both of the lateral surface parts 313 of the housing 310.

For example, the first front coupling part 311c and the second front coupling part 311d may be disposed on the left lateral surface part 313 of the housing 310 and spaced a predetermined distance apart from each other in the up-down direction, and the first front coupling part 311c and the second front coupling part 311d may also be disposed on the right lateral surface part 313 of the housing 310 and spaced a predetermined distance apart from each other in the up-down direction.

In response, the second front panel 130 may be provided with a pair of fitting coupling parts 133a and a pair of fixing coupling parts 133b.

At this time, the pair of fitting coupling parts 133a may be spaced from each other in the lateral direction, with the access hole 132 therebetween, and the pair of fixing coupling parts 133b may be spaced from each other materially with the access hole 132 therebetween.

The fitting coupling part 133a and the fixing coupling part 133b may be spaced a predetermined distance apart from each other in the up-down direction.

Each of the first front coupling parts 311c may be coupled to each of the fitting coupling parts 133a, and each of the second front coupling parts 311d may be coupled to each of the fixing coupling parts 133b. At this time, the first front coupling part 311c may be fitted and coupled to the fitting coupling part 133a.

The second front coupling part 311d may be coupled to the fixing coupling part 133b by a fastening member s that fixes the second front coupling part 311d to the fixing coupling part 133b.

In an example, the first front coupling part 311c may be coupled to the fitting coupling part 133a, based on a hook-coupling method. To this end, the first front coupling part 311c may be shaped into a hook that has an elastically deformable projection in the lateral direction or in the up-down direction. The second front coupling part 311d may be provided as a structure having a fitting hole that is open forward, and a holding jaw that surrounds the perimeter of the fitting hole.

The fitting coupling part 133a may be provided as a structure that protrudes upward from the end portion of the front of the lateral surface part 313. The fitting coupling part 133a may have a hollow hole that is formed in a penetrating manner, in the front-rear direction.

The fixing coupling part 133b may be provided in the form of a boss Boss that protrudes rearward from the rear surface of the second front panel 130. The fixing coupling part 133b may have a hollow hole that is formed in a penetrating manner, in the front-rear direction. The fitting coupling part 133a and the fixing coupling part 133b may be coupled by a fastening member such as a screw and the like that penetrates the hollow holes of the fitting coupling part 133a and the fixing coupling part 133b.

The first front coupling part 311c may be coupled to the fitting coupling part 133a , based on a hook coupling method, and fitted and coupled to the second front panel 130. The second front coupling part 311d may be coupled to the second front panel 130 by a fastening member that fixes the second front coupling part 311d to the fixing coupling part 133b.

Coupling the housing 310 to the second front panel 130 may comprise fitting the first front coupling part 311c to the fitting coupling part 133a, temporarily fixing the housing 310 to the second front panel 130, and then fixing the second front coupling part 311d to the fixing coupling part 133b with a fastening member.

In the embodiment, a fitting and coupling process may be performed at a plurality of points along the lateral direction, and a fitting and coupling process and a fixing and coupling process may be performed together at a plurality of points along the up-down direction.

Since the fitting and coupling process and the fixing and coupling process are performed at a plurality of points as described above, the housing 310 and the second front panel 130 may be coupled reliably.

As a result, the housing 310 and the second front panel 130 may be coupled easily and rapidly, and the housing 310 may be reliably fixed in an accurate position, relative to the second front panel 130.

Referring to FIGS. 8 and 11, the second front panel 130 may be provided with a reinforcement rib 133c. The reinforcement rib 133c may be disposed near the second inner wall part 131b that is disposed at the upper side of the access hole 132.

The reinforcement rib 133c may protrude from the upper surface of the second inner wall part 131b. The reinforcement rib 133c may be disposed to overlap the access hole 132 in the up-down direction.

The second front panel 130 may be provided with a plurality of reinforcement ribs 133c. For example, the plurality of reinforcement ribs 133c may be disposed on the upper surface of the second inner wall part 131b along the lateral direction.

The plurality of reinforcement ribs 133c that protrudes from the second inner wall part 131b as described above may improve the strength of the second inner wall part 131c.

As described above, the first inner wall part 131a and the second inner wall part 131b may be disposed on the path in which the water tank 320 moves. The first inner wall part 131a may support the water tank 320 passing through the access hole 132 from below, and the second inner wall part 131b may be disposed at the upper side of the water tank 320 passing through the access hole 132.

In the state where the water tank 320 is filled with water, a significant load is applied to the first inner wall part 131a. The load applied to the first inner wall part 131a may act as a force of making the second inner wall part 131b hang down.

In the embodiment, the first inner wall part 131a is coupled to the bottom surface of the housing 310.

The bottom surface of the first inner wall part 131a may be supported by the overlap surface 311b that is disposed at the lower side of the first inner wall part 131a.

That is, the first inner wall part 131a is supported by the housing 310 that is coupled to the first inner wall part 131a, and resists the load applied by the water tank 320 effectively.

In the case where the shape of the first inner wall part 131a is deformed due to the load applied to the first inner wall part 131a, the deformation of the first inner wall part 131a may affect the second inner wall part 131b. That is, in the case where the first inner wall part 131a sags, the second inner wall part 131b connecting with the first inner wall part 131a hangs downward together with the first inner wall part.

In the case where the second inner wall part 131b hangs downward, the second inner wall part 131b presses the water tank 320 downward, and the water tank 320 may tilt, causing an increase in the friction between the second inner wall part 131b and the water tank 320 and preventing the water tank 320 from moving smoothly.

In the case where the second inner wall part 131b hangs downward, aesthetic qualities of the exterior of the cooking appliance deteriorate, and the friction between the second inner wall part 131b and the water tank 320 increases, causing noise at a time of moving the water tank 320.

Unlike the first inner wall part 131a, the second inner wall part 131b is not coupled to the housing 310. In the case where an external force is applied downward to the second inner wall part 131b, the second inner wall part 131b may be deformed more easily than the first inner wall part 131a.

Considering this, in the embodiment, a plurality of reinforcement ribs 133c may be formed on the upper surface of the second inner wall part 131b. The reinforcement ribs 133c may support the second inner wall part 131b to prevent the second inner wall part 131b from hanging downward easily.

In the embodiment, the first inner wall part 131a is supported by the housing 310 coupled to the first inner wall part 131a, to resist a load applied by the water tank 320 effectively.

In the case where the load resistance of the first inner wall part 131a increases as described above, the second inner wall part 131b may be less affected by a load applied to the first inner wall part 131a.

Further, since the second inner wall part 131b is supported by the reinforcement ribs 133c, the second inner wall part 131b may resist a force applied to the second inner wall part 131b effectively.

An interaction between the force of supporting the first inner wall part 131a and the force of supporting the second inner wall part 131b may lead to effective support of the second inner wall part 131b such that the second inner wall part 131b is prevented from sagging.

Thus, the cooking appliance in the embodiment may effectively suppress the sag of the second inner wall part 131b, the inclination of the water tank 320 caused by the sag of the second inner wall part, the failure in the withdrawal/insertion of the water tank 320, the deterioration in the exterior of the cooking appliance, an increase in noise, and the like.

The second front panel 130 may further comprise an outer wall part 131d. The outer wall part 131d may be disposed at the upper side of the second inner wall part 131b. The outer wall part 131d may protrude rearward from the panel main body 131, like the second inner wall part 131b.

Further, the second front panel 130 may further comprise a connection rib 133d. The connection rib 133d may protrude rearward from the panel main body 131. The connection rib 133d may be provided to connect between the outer wall part 131d and the second inner wall part 131b.

The connection rib 133d may connect the second inner wall part 131b with the outer wall part 131d, and improve the strength of the second inner wall part 131b. Certainly, the connection rib 133d may improve the strength of the panel main body part 131.

### [Disposition relationship between duct part and water supply device]

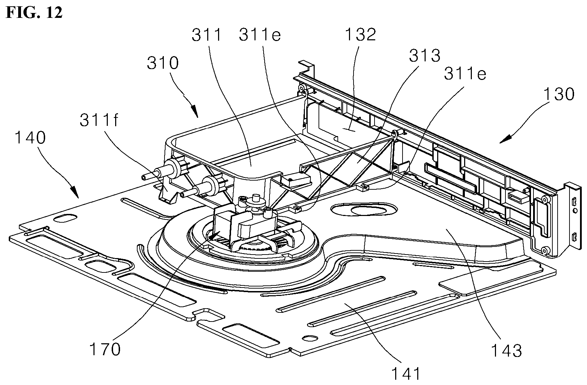

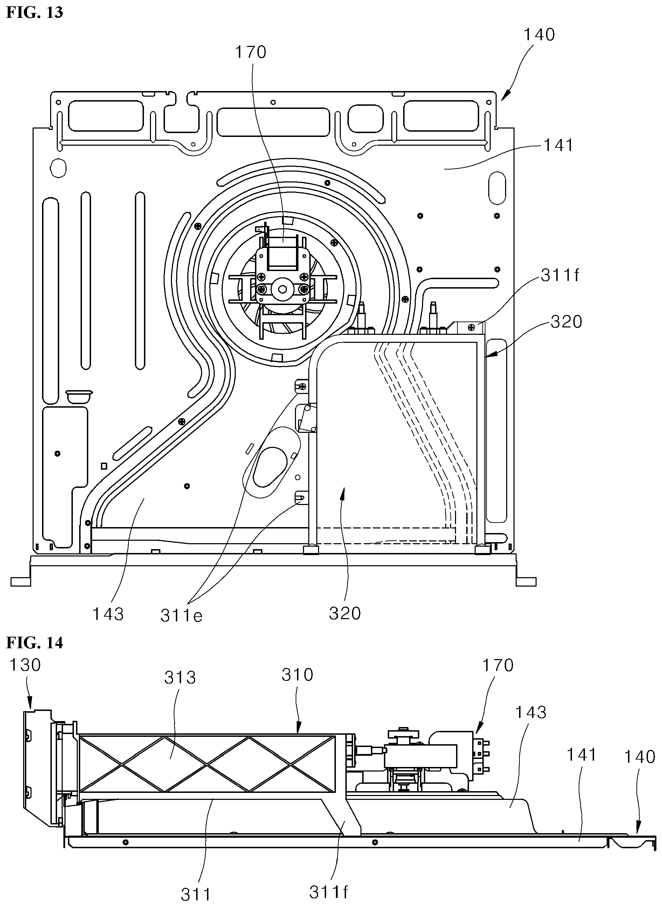

FIG. 12 is a perspective view separately showing an upper panel and a housing of a cooking appliance in one embodiment, FIG. 13 is a plan view showing a coupling state between the upper panel and the housing in FIG. 11, and FIG. 14 is a side view showing a coupling state between the upper panel and the housing in FIG. 11.

Referring to FIGS. 5 and 12 to 14, the upper panel 140 may be disposed at the upper side of the cavity 110, and the housing 310 may be disposed at the upper side of the upper panel 140.

In the embodiment, at least a portion of the housing 310 may be disposed to overlap a duct part 143 in the up-down direction. That is, at least a portion of the housing 310 may be disposed in the upper area of the duct part 143.

In the embodiment, the housing 310 is shaped into an approximate cuboid, for example. The bottom surface of the housing 310 may be shaped into a horizontally planar surface parallel with a planar surface that is formed by the blocking panel part 141 of the upper panel 140 approximately.

Accordingly, in the case where at least a portion of the housing 310, as described above, is disposed in the upper area of the duct part 143, most of the area of the housing 310 may be spaced from the blocking panel part 141 in the up-down direction. In the embodiment, the entire area of the housing 310 is spaced upward from the blocking panel part 141, for example.

A partial area of the housing 310, disposed in the upper area of the duct part 143, may be mounted on the upper surface of the duct part 143. That is, the housing 310 may be spaced upward from the blocking panel part 141 by a difference in the heights of the blocking panel part 141 and the duct part 143 and mounted on the upper surface of the duct part 143.

The water supply device 300 may further comprise a first downward coupling part 311e and a second downward coupling part 311f.

The first downward coupling part 311e may be disposed in an area that is in the upper portion of the duct part 132, out of the two areas of the housing 310. The second downward coupling part 311f may be disposed in an area that is in the upper portion of the blocking panel part 141, out of the two areas of the housing 310.

The first downward coupling part 311e may protrude from the housing 310 toward the duct part 143. Specifically, the first downward coupling part 311e may protrude in the lateral direction from an edge that connects between the bottom surface part 311 and the lateral surface part 313. The first downward coupling part 311e may be coupled to the duct part 143, at the upper side of the duct part 143.

Based on the coupling between the first downward coupling part 311e and the duct part 143, the housing 310 may be coupled to the duct part 143. A plurality of first downward coupling parts 311e may be provided in the front-rear direction. Accordingly, the housing 310 and the duct part 143 may be coupled at a plurality of points, in the front-rear direction.

The second downward coupling part 311f may protrude from the housing 310 toward the blocking panel part 141. Specifically, the second downward coupling part 311f may protrude downward from an edge that connects between the bottom surface part 311 and the lateral surface part 313. The second downward coupling part 311f may be coupled to the blocking panel part 141, at the upper side of the blocking panel part 141.

Based on the coupling between the second downward coupling part 311f and the blocking panel part 141, the housing 310 may be coupled to the blocking panel part 141. At this time, the second downward coupling part 311f may protrude downward from the housing 310 by a length that corresponds to a difference in the heights of the blocking panel part 141 and the duct part 143.

In the embodiment, the duct part 143 is disposed approximately at the center in the electronic component space 103 in the lateral direction, for example. The housing 310 may be eccentric to one side in the electronic component space 103 in the lateral direction.

Accordingly, the first downward coupling part 311e coupled to the duct part 143, and the second downward coupling part 311f coupled to the blocking panel part 141 may be spaced from each other in the lateral direction. That is, one side of the housing 310 in the lateral direction may be coupled to the duct part 143 by the first downward coupling part 311e, and the other side of the housing 310 in the lateral direction may be coupled to the blocking panel part 141 by the second downward coupling part 311f.

The second downward coupling part 311f may be eccentric to the rear of the housing 310. Preferably, the second downward coupling part 311f may protrude from the end portion of the rear of the housing 310.

Accordingly, the front of the housing 310 may be coupled to the second front panel 130, one side of the housing 310 in the lateral direction may be coupled to the duct part 143 by the first downward coupling part 311e, and the other side of the housing 310 in the lateral direction may be coupled to the blocking panel part 141 by the second downward coupling part 311f.

Further, the rear of the housing may be coupled to the upper panel 140 by the first downward coupling part 311e and the second downward coupling part 311f.

The housing 310, as described above, may be coupled to the second front panel 130 and the upper panel 140 at a plurality of points comprising points at both sides in the front-rear direction and points at both sides in the lateral direction, and reliably fixed to the inside of the electronic component space 103.

In relation to the housing 310 installed as described above, a partial area of the housing 310 may contact the duct part 143, and the remaining area of the housing 310 may be spaced from the blocking panel part 141.

The duct part 143 may remain cold with the help of cold air flowing in the duct part 143. Accordingly, a partial area of the housing 310, contacting the duct part 143, may be cooled by the duct part 143.

Since the remaining area of the housing 310 is spaced from the blocking panel part 141, the remaining area of the housing 310 may be less affected by the blocking panel part 141 the temperature of which remains higher than the duct part 143.

That is, the remaining area of the housing 310 may remain spaced from the blocking panel part 141, and avoid the effect of heat transferred from the blocking panel part 141.

Further, a space between the remaining area and the blocking panel part 141 may form an air passage in the lower area of the housing 310. External air may flow into the electronic component space 103 through the vent hole disposed in the lateral direction of the electronic component space 103, and the drawn external air may cool the housing 310 while passing through the lower area of the housing 310.

As described above, the housing 310 in the embodiment may be cooled by an external air passing through the lower area of the housing 310, at the same time as the housing 310 is cooled by the duct part 143.

Accordingly, the thermal resistance of the housing 310 may improve without causing an increase in the manufacturing costs of the housing 310, and materials for the housing 310 may be freely selected.

### [Water tank and surrounding structure thereof]

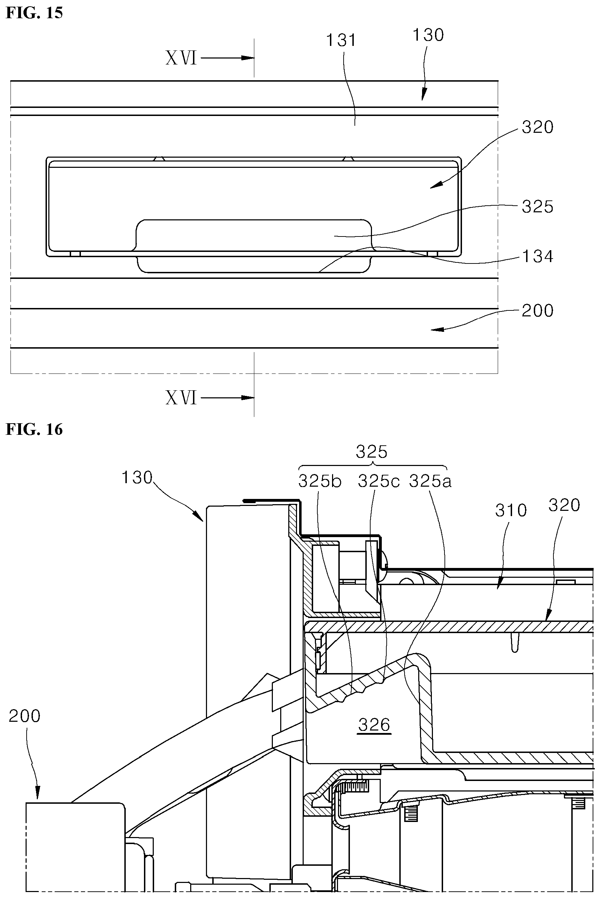

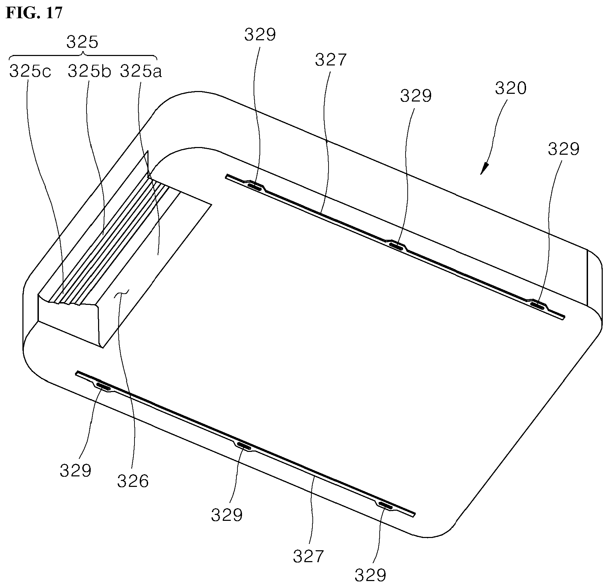

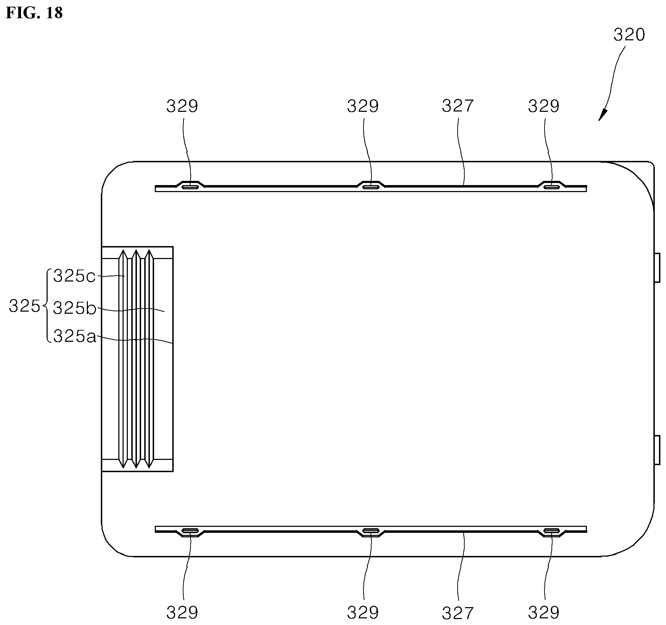

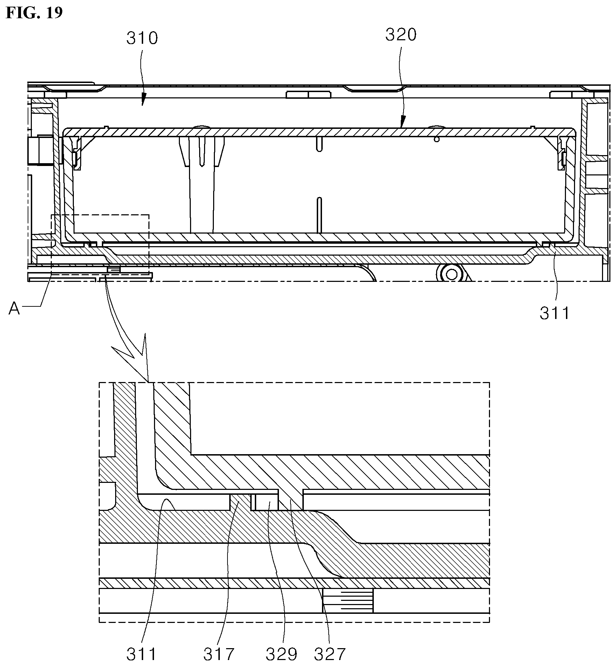

FIG. 15 is an enlarged front view showing the front surface of a water tank that is exposed to the front of a cooking appliance in one embodiment, FIG. 16 is a cross-sectional view along line " "XVI-XVI" in FIG. 15, and FIG. 17 is a bottom perspective view separately showing a water tank of a cooking appliance in one embodiment. FIG. 18 is a bottom view showing the water tank in FIG. 17, and FIG. 19 is a front cross-sectional view showing a coupling structure between a housing and water tank in one embodiment.

Referring to FIGS. 15 to 18, the front surface of the water tank 320 may be exposed to the front of the second front panel 130 through the access hole 132. The front surface of the water tank 320 may have a shape comprising a planar surface that is parallel with the vertically planar surface formed by the second front panel 130.
the front surface of the water tank 320 may be shaped into a planar surface that is almost the same as the vertically planar surface formed by the second front panel 130.

The edge areas of both sides of the front surface of the water tank 320 may also be shaped into a curved surface, to reduce the possibility of a collision between the water tank 320 and the second front panel 130 and the risk of injuries caused by the water tank 320, while the water tank 320 is withdrawn.

**In** the state where the control panel 200 blocks the second front panel 130, the water tank 320 is not exposed to the front of the cooking appliance. However, in the state where the control panel 200 opens the second front panel 130, the water tank 320 may be exposed to the front of the cooking appliance.

The user may withdraw the water tank 320 exposed forward from the inside of the cooking appliance or insert the drawn water tank 320 into the cooking appliance through the access hole 132.

A grip part 325 may be provided at the water tank 320 to allow the user to hold the water tank 320. The grip part 325 may be exposed toward the front of the water tank 320.

**In** the embodiment, the grip part 325 may form a groove that is concave rearward from the front surface of the water tank 320, at the water tank 320. The grip part 325 may comprise a depressed surface part 325a and a connected surface part 325b.

The depressed surface part 325a may be spaced a predetermined distance apart from the front surface of the water tank 320 rearward. The connected surface part 325b may connect between the front surface of the water tank 320 and the depressed surface part 325a.

An insertion space 326 surrounded by the connected surface part 325b and the depressed surface part 325a may be formed at the lower side of the connected surface part 325b. The insertion space 326 may be open forward.

**In** an example, the depressed surface part 325a may form a vertical wall surface that extends upward from the bottom surface of the water tank 320. The connected surface part 325b may connect to the upper end of the depressed surface part 325a.

Accordingly, the insertion space 326 may be disposed at the front of the depressed surface part 325a and at the lower side of the connected surface part 325b. The insertion space 326 may be eccentric to the lower side of the water tank 320, and exposed to a position eccentric to the lower side of the front surface of the water tank 320.

In the embodiment, the connected surface part 325b may incline upward toward the rear thereof. That is, the position of the connected surface part 325b becomes higher toward the rear thereof.

Accordingly, the insertion space 326 may be formed in a way that the insertion space 236 expands upward toward the rear thereof. Since the insertion space 326 has the above-described shape, a space into which the user's finger comes may be effectively ensured in the insertion space 326, to allow the user to grip the water tank 320 reliably.

Further, the water tank 320 may further comprise a grip projection 325c. The grip projection 325c may be provided at the grip part 325, and protrude from the connected surface part 325b.

A plurality of grip projections 325c may be disposed on the connected surface part 325b and spaced a predetermined distance apart from each other in the front-rear direction. Each of the grip projections 325c may protrude downward from the connected surface part 325b.

The connected surface part 325b is a portion touched by the user's finger when the user puts the user's hand into the grip part 325. Since the connected surface part 325b is provided with the grip projections 325c, the user may grip the water tank 320 reliably, and the slip of the water tank 320 from the user's hand may be suppressed effectively.

Referring to FIGS. 9 and 17 to 19, a sliding projection 327 may be disposed between the housing 310 and the water tank 320. The sliding projection 327 may be disposed between the bottom surface part 311 of the housing 310, and the bottom surface of the water tank 320.

In the embodiment, the sliding projection 327 may be provided at the water tank 320, for example. The sliding projection 327 may protrude downward from the bottom surface of the water tank 320.

In another example, the sliding projection 327 may be provided at the housing 310. At this time, the sliding projection 327 may protrude upward from the bottom surface part 311 of the housing 310.

A pair of sliding projections 327 may be disposed at the water tank 320 and spaced a predetermined distance apart from each other in the lateral direction. Each of the sliding projections 327 may be formed to extend in the front-rear direction.

The length of each of the sliding projections 327 in the lateral direction may be much less than the length of the bottom surface part 311 of the housing 310 in the lateral direction. That is, the sliding projection 327 may be shaped into a long thin rod.

In terms of the water tank 320, the entire bottom surface of the water tank 320 may contact the bottom surface part 311 of the housing 310 through the sliding projection 327 without contacting the bottom surface part 311 of the housing 310. That is, an area where the bottom surface of the water tank 320 and the bottom surface part 311 of the housing 310 contact may be limited to a contact area between the sliding projection 327 and the bottom surface part 311.

The sliding projection 327 formed as described above may reduce a contact surface area between the housing 310 and the water tank 320, and reduce a frictional force that is generated at a time when the water tank 320 moves.

Further, a pair of guide projections 317 may be disposed at the housing 310 and spaced a predetermined distance apart from each other in the lateral direction. Each of the guide projections 317 may protrude upward from the bottom surface part 311 and extend in the front-rear direction.

The length of the guide projection 317 in the up-down direction maybe less than the length of the sliding projection 327 in the up-down direction. That is, while the sliding projection 327 contacts the bottom surface part 311 of the housing 310, the guide projection 317 does not contact the bottom surface of the water tank 320.

A distance between the pair of guide projections 317 in the lateral direction may be greater than a distance between the pair of sliding projections 327 in the lateral direction.

The pair of sliding projections 327 provided at the water tank 320 may be disposed between the pair of guide projections 317.

The sliding projections 327 that are disposed between the pair of guide projections 317 as described above may move in the front-rear direction in an area limited between the pair of guide projections 317. That is, in terms of the guide projection 317, the area where the guide projection 317 moves is limited, the water tank 320 is prevented from shaking in the lateral direction while the water tank 320 moves in the front-rear direction.

Further, a lateral projection 329 may be provided at at least one of the housing 310 and the water tank 320. The lateral projection 329 may protrude from the guide projection 317 or the sliding projection 327, to be disposed between the guide projection 317 and the sliding projection 327 that face each other in the lateral direction.

In the embodiment, the lateral projection 329 is provided at the water tank 320, for example. A plurality of lateral projections 329 may be disposed on the bottom surface of the water tank 320 and spaced a predetermined distance apart from each other in the front-rear direction. Each of the lateral projections 329 may protrude from the sliding projection 327 in the lateral direction, and be disposed between the sliding projection 327 and the guide projection 317 that face each other in the lateral direction.

For example, the pair of sliding projections 327 may be disposed between the pair of guide projections 317, and the lateral projection 329 may be respectively disposed between the guide projection 317 and the sliding projection 327 that face each other in the lateral direction.

At this time, a total of the lengths of the pair of lateral projections 329 in the lateral direction may be the same as a value that is calculated by deducting a distance between the pair of sliding projections 327 in the lateral direction from a distance between the pair of guide projections 317 in the lateral direction.

That is, a distance between the guide projection 317 and the sliding projection 327 in the lateral direction, which face each other in the lateral direction, may be the same as the length of the lateral projection 329 in the lateral direction.

Accordingly, the lateral projection 329 may fill the distance between the guide projection 317 and the sliding projection 327 that face each other in the lateral direction, and the sliding projections 327 may move between the pair of guide projections 317, only in the front-rear direction, and may not move in the lateral direction.

The lateral projection 329 may limit a lateral movement of the water tank 320 that moves in a passage formed between the pair of guide projections 317, in the front-rear direction. That is, the lateral projection 329 may suppress the generation of a lateral shake of the water tank 320 while the water tank 320 moves in the front-rear direction.

With the help of the lateral projection 329, a contact surface area between the guide projection 317 and the water tank 320 may be much less than a contact surface area between the sliding projection 327 and the guide projection 317.

That is, the lateral projection 329 may reduce the contact surface area between the guide projection 317 and the water tank 320, resulting in a reduction in the frictional force that is generated at a time when the water tank 320 moves.

Preferably, each lateral projection 327 may be shaped into a curved surface. The lateral projection 329 may reduce a contact surface area between the guide projection 317 and the lateral projection 329 effectively.

In the case where the lateral projection 329 is shaped into a curved surface, the lateral projection 329 may be readily inserted into an area between the pair of guide projections 317, at a time when the water tank 320 is inserted into the housing 310.

Referring to FIGS. 15, 16 and 19, the second front panel 130 may be provided with a lower groove part 134. The lower groove part 134 may be provided on the front surface of the first inner wall part 131a, and exposed toward the front of the first inner wall part 131a.

The lower groove part 134 may be depressed rearward from the front surface of the first inner wall part 131a. A space surrounded by the lower groove part 134 on the first inner wall part 131a may be open forward and upward .

The lower groove part 134 may be depressed downward from the upper end of the first inner wall part 131a. The lower groove part 134 formed as described above may be open upward toward the grip part 325. The lower groove part 134 may connect to the inner space of the grip part 325, i.e., the insertion space 326, in the up-down direction.

The lower groove part 134 may expand a front entrance of the insertion space 326 formed in the grip part 325. The lower groove part 134 may allow the user to put the user's hand into the grip part 325 and hold the water tank 320 readily.

Preferably, the upper end of the first inner wall part 131a may be formed to incline downward toward the front. Accordingly, the lower groove part 134 that is concavely depressed downward and forward may be provided at the upper end of the first inner wall part 131a.

### [Control panel and surrounding structure thereof]

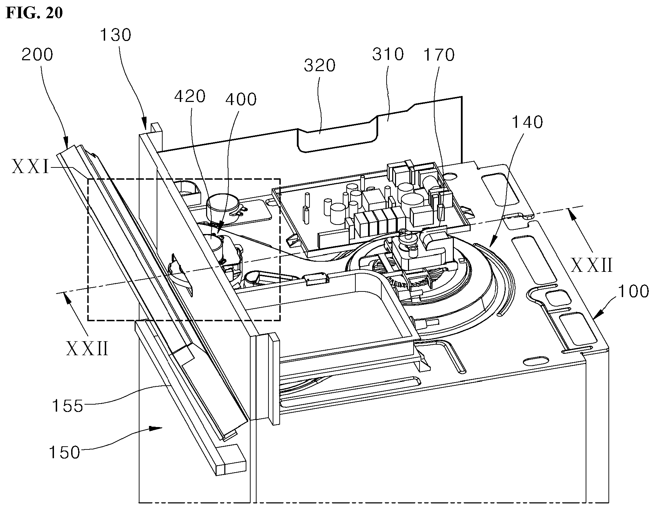

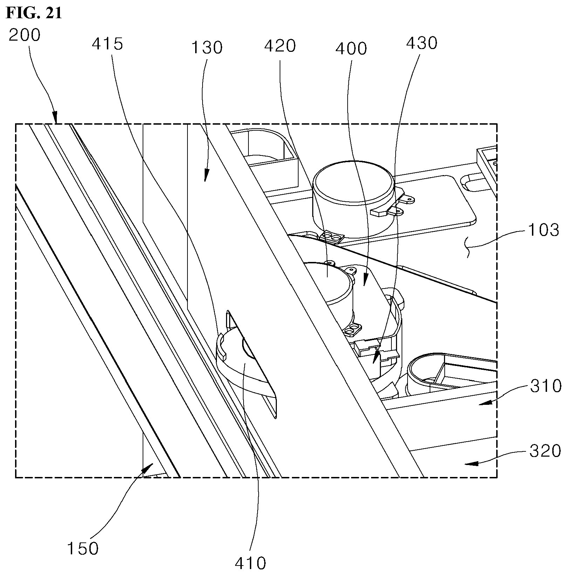

FIG. 20 is a view showing an operation state of an opening module of a cooking appliance in one embodiment, and FIG. 21 is an enlarged view showing portion "XXI" in FIG. 20.

Referring to FIGS. 4 to 5 and 20 to 21, the cooking appliance in one embodiment may comprise a control panel 200 that is provided to open the second front panel 130 forward.

The control panel 200 is provided to swivel between the closing position and the opening position. In the embodiment, the closing position is the position of the electronic component space 103 or the control panel 200 that blocks a structure disposed at the front of the electronic component space 103, from the front, for example. The opening position is the position of the electronic component space 103 or the control panel 200 that opens a structure disposed at the front of the electronic component space 103, forward, for example.

In the embodiment, the front of the electronic component space 103 is blocked by the second front panel 130, for example. Accordingly, the closing position may be defined as the position of the control panel 200 that blocks the second front panel 130 from the front of the second front panel. The opening position may be defined as the position of the control panel 200 that opens the second front panel 130 forward.

If the second front panel 130 is not between the electronic component space 103 and the control panel 200, the closing position may be defined as the position of the control panel 200 that blocks the electronic component space 103 from the front of the electronic component space 103. The opening position may be defined as the position of the control panel 200 that opens the electronic component space 103 forward.

The cooking appliance in the embodiment may further comprise a hinge module 250. The hinge module 250 may support the control panel 200 in a way that the control panel 200 can swivel around an axis in the lateral direction.

The center of the swivel of the control panel 200 may be disposed further downward than the center of the control panel 200 in the up-down direction. In an example, the control panel 200 may swivel around the lower end of the control panel 200.

As the control panel 200 swivels from the closing position to the opening position, the control panel 200 may swivel around the lower end thereof and be unfolded forward. At this time, the rear surface of the control panel 200 faces upward, and the front surface of the control panel 200 faces downward.

As the control panel 200 swivels from the opening position to the closing position, the control panel 200 may swivel around the lower end thereof and stand vertically. The control panel 200 may stand in parallel with the second front panel 130 and block the second front panel 130 from the front thereof. At this time, the front surface of the control panel 200 faces forward, and the rear surface of the control panel 200 faces rearward.

The control panel 200 may be swivably coupled to the main body 100 with the hinge module 250. The cooking appliance may be provided with a pair of hinge modules 250, and the pair of hinge modules 250 may be spaced a predetermined distance from each other in the lateral direction.

For example, the par of hinge modules 250 may be spaced from each other by a distance close to the length of the control panel 200 in the lateral direction. Accordingly, each of the hinge modules 250 may connect to the control panel 200, in a position adjacent to the end portion of the control panel 200 in the lateral direction.

Each of the hinge modules 250 may be disposed in the electronic component space 103. Each of the hinge modules 250 may be coupled at least one of the protruding surface part 123, 125 that protrudes upward from the lateral end of the first front panel 120, the lateral surface of the cavity 110 that protrudes upward toward the electronic component space 103 from the cooking space 101, and the upper panel 140 that defines the lower boundary surface of the electronic component space 103, and fixed to the inside of the electronic component space 103.

Each of the hinge modules 250 may comprise a hinge part 251 and a hinge case 255.

The hinge part 251 may be provided to support the control panel 200 swivably. The hinge part 251 may be hinge-coupled to the control panel 200 in a position eccentric to the lower side of the control panel 200.

The hinge case 255 may form the exterior of the hinge module 250, and accommodate a portion of the hinge part 251. The hinge case 255 may support the hinge part 251 swivably. That is, the control panel 200 may be swivably supported by the end portion of the front of the hinge part 251, and the end portion of the rear of the hinge part 251 may be swivably supported by the hinge case 255.

In the embodiment, the hinge case 255 is shaped into a cuboid, for example. In an example, the hinge case 255 may be shaped in to a rectangle box that has a narrow width in the lateral direction and has a long length in the front-rear direction.

The hinge case 255 formed as described above may be disposed in the electronic component space103. Each of the hinge modules 250 may be disposed at the rear of the protruding surface part 123, 125 that protrudes upward from the lateral end of the first front panel 120, and accordingly, each hinge case 255 may be disposed at the rear of the protruding surface part 123, 125.

The front surface of the hinge case 255 may be disposed to face the rear surface of the protruding surface part 123, 125. The front surface of the hinge case 255 may be coupled to the protruding surface part 123, 125.

In the embodiment, the front surface of the hinge case 255 is coupled to the protruding surface part 123, 125, and the lateral surface of the hinge case 255 is coupled to the lateral surface of the cavity 110, for example. Since two or more surfaces of the hinge case 255 are coupled to the main body 100, the hinge module 250 may support the control panel 200 reliably.

Each of the protruding surface parts 123, 125 may be provided with a passage hole 124. The passage hole 124 may be formed in a way that penetrates the protruding surface part 123, 125 in the front-rear direction. The passage hole 124 may be disposed on the front surface of the hinge case 255, and disposed in an area where the passage hole 124 overlaps the hinge part 251 in the front-rear direction. The hinge part 251 may pass through the protruding surface part 123, 125 through the passage hole 124 that is formed as described above.

Further, the second front panel 130 may have a passage hole 130a that communicates with the passage hole 124. The hinge part 251 may penetrate the first front panel 120 and the second front panel 130 through the passage hole 124 of the first front panel 120 and the passage hole 130a of the second front panel 130.

### [Structure and operation of opening module]

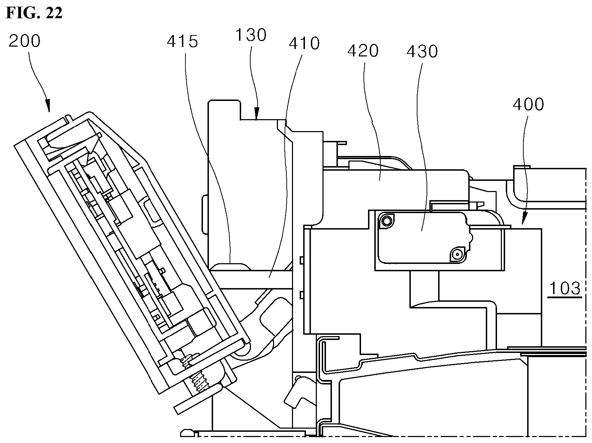

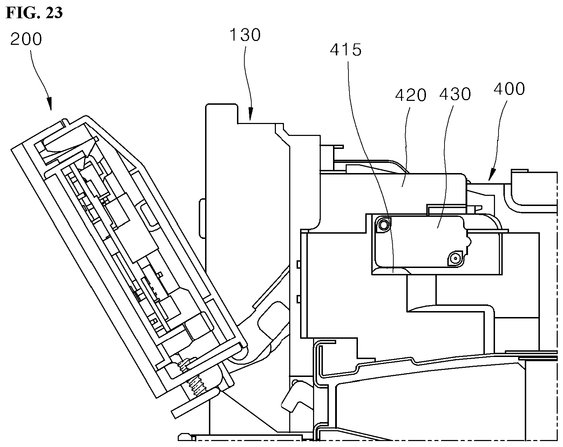

FIG. 22 is a cross-sectional view along line "XXII-XXII" in FIG. 20, and FIG. 23 is a view showing a rotation state of a push member in FIG. 21.

Referring to FIGS. 20 to 22, the cooking appliance in one embodiment may further comprise an opening module 400. The opening module 400 is provided to push the control panel 200 in/at/from the closing position forward and move the control panel 200 to or toward the opening position or to an intermediate position between the opening and the closing positions.

The opening module 400 comprises a pushing member 410. The pushing member 410 may be disposed at the rear of the control panel 200 in a way that the pushing member 410 can rotate. In the embodiment, the pushing member 410 is provided to rotate around an axis in the up-down direction, for example.

The pushing member 410 is shaped into a cam. A portion of the pushing member 410 may protrude further than the remaining portion in the centrifugal direction. In the invention, the pushing member 410 is shaped into a cam that pushes the control panel 200 forward, contacting the rear surface of the control panel 200 at least once, while the pushing member 410 rotates once.

Accordingly, while the pushing member 410 rotates once, the rear surface of the control panel 200 may contact the pushing member 410. As the rear surface of the control panel 200 contacts the pushing member 410 as described above, the pushing member 410 may contact the rear surface of the control panel 200 and push the control panel 200 forward, and the control panel 200 may be pushed forward by the pushing member 410 and moved toward the opening position.

The opening module 400 may be disposed in the electronic component space 103. The pushing member 410 provided at the opening module 400 may also be disposed in the electronic component space 103. That is, the pushing member 410 may be disposed at the rear of the second front panel 130.

In the case where the control panel 200 is in/at the closing position, the entire area of the pushing member 410 may be disposed at the rear of the second front panel 130. As the pushing member 410 starts to rotate, a partial area of the pushing member 410 may protrude toward the front of the second front panel 130.

The second front panel 130 may have a camp passage hole 136. The cam passage hole 136 may be formed at the panel main body part 131 in a way that penetrates the panel main body part 131 in the front-rear direction. The cam passage hole 136 may form a passage allowing the pushing member 410 to pass through the second front panel 130.

A partial area of the pushing member 410 may protrude to the front of the second front panel 130 through the cam passage hole136. In this state, in the case where the pushing member 410 keeps rotating, the pushing member 410 may return to a position in which the entire area of the pushing member 410 is disposed at the rear of the second front panel 130 (hereafter, "a standby position").

The opening module 400 may tilt the control panel 200 disposed in/at the closing position forward, with a predetermined gradient. In the embodiment, the predetermined gradient is a gradient of the control panel 200 that may move to the opening position by using the self weight of the control panel 200, for example.

For example, in the case where the gradient of the control panel 200 in/at the opening position is 0° while the gradient of the control panel in/at the closing position is 90°, the predetermined gradient may be set in a range of 30 to 60°. At this time, the predetermined gradient may change based on the position of the center of gravity of the control panel 200, the position of the swivel center of the control panel 200, the properties of the hinge module 250 and the like.

The pushing member may push the control panel 200 forward to tilt the control panel 200 with the predetermined gradient, while the pushing member 410 rotates as the opening module 400 operates and tilts the control panel 200 forward.

The gradient of the control panel 200 that tilts forward may be adjusted based on a distance at which the pushing member 410 pushes the control panel 200. The distance at which the pushing member 410 pushes the control panel 200 may vary depending on the shape of the pushing member 410. For example, as the diameter and eccentricity of the pushing member 410 increase, the distance at which the pushing member 410 pushes the control panel 200 may increase.

In another example, the predetermined gradient is the gradient of the control panel 200, which allows the control panel 200 to move to the opening position, only in the case where an external force is additionally applied.

For example, in the case where the control panel 200 swivels to a position further forward than the closing position but cannot swivel to the opening position on its own, the gradient of the control panel 200 may be set to the predetermined gradient.

At this time, a primary opening operation of the control panel 200 is performed based on the operation of the opening module 400, and then only when the user manually pulls the opening module forward, the control panel 200 may move to the opening position.

For example, in the primary opening operation of the control panel 200, the control panel may move from the closed position to an intermediate position, and then can be swiveled forward and downward from the intermediate position to the open position. The movement from the closed position to an intermediate position may also be swiveled forward and downward about/with respect to the swivel axis/center. Alternatively, movement from the closed position to an intermediate position may be swiveled forward and downward about/with respect to another swivel axis/center different than the swivel axis/center for the intermediate position to the open position, or may be a non-swivel movement such as translational movement.

At this time, the predetermined gradient may be set to a value at which the control panel 200 is in the position where the user easily holds and pulls the control panel 200 and in the position where the control panel 200 cannot move to the opening position by using its self weight.

Thus, the user can move the control panel 200 to the opening position conveniently and readily, and the full opening of the control panel 200, caused by unintentional manipulation errors, can be prevented.

The opening module 400 further comprises a driving part 420. The driving part is provided to supply power for rotating the pushing member 410. The driving part 420 may comprise a driving motor generating a rotational force for rotating the pushing member 410.

The opening module 400 further comprises a pushing member sensing part 430. The pushing member sensing part 430 may be provided to control the operation of the driving part 420. In the embodiment, the pushing member sensing part 430 senses the position of the pushing member 410, and based on the sensing results, a controller controlling the operation of the cooking appliance controls the operation of the driving part 420.

The pushing member sensing part 430 comprises a sensor that contacts at least a portion of the pushing member 410 and senses the position of the pushing member 410. In the embodiment, the pushing member sensing part 430 comprises a micro switch-type sensor, for example. The pushing member sensing part 430 may be turned on/off based on the movement of an actuator protruding on the micro switch.

A contact projection 415 may be provided at the pushing member 410. The contact projection 415 may protrude from the pushing member 410. The position of the contact projection 415 may change while the contact projection 415 rotates together with the pushing member 410. Preferably, the contact projection 415 may be disposed in a position adjacent to the outer circumferential surface of the pushing member 410.

The contact projection 415 may be provided in a way that contacts the actuator protruding on the sensor of the pushing member sensing part 430. The sensor may be turned on/off based on the movement of the actuator in contact with the contact projection 415, and the sensor turned on/off may generate a signal. The position of the pushing member 410 may be found based on the signal generated by the micro switch.

In an example, the sensor of the pushing member sensing part 430 may be disposed at the upper side of the pushing member 410. The actuator of the sensor may protrude downward toward the pushing member 410. In response, the contact projection 415 may protrude upward from the pushing member 410 toward the sensor.

In the embodiment, the pushing member sensing part 430 and the contact projection 415 may be provided to find the position of the pushing member 410. Specifically, the pushing member sensing part 430 and the contact projection 415 may be provided to determine whether the pushing member 410 returns to the standby position.

Accordingly, the position of the contact projection 415 may be set to a position where the contact projection 415 contacts the actuator of the sensor as the pushing member 410 returns to the standby position. At this time, as the pushing member 410 returns to the standby position, the sensor of the pushing member sensing part 430 is turned on. Thus, the driving part 420 stops operating, and the position of the pushing member 410 may stay in the standby position.

The control panel 200 may be provided with a plurality of buttons for setting an operation of the heating part, and may also be provided with a button for setting an opening and closing operation of the control panel 200 (hereafter, a "control panel opening and closing button").

As the user presses the control panel opening and closing button, the driving part 420 starts to operate, and accordingly, the pushing member 410 starts to rotate. The pushing member 410, which starts to rotate as described above, may push the control panel 200 forward.

The control panel 200, which is pushed forward as described above, may incline with the predetermined gradient, and then move to the opening position. At this time, the control panel 200 may move to the opening position by using its self weight in the state where the control panel 200 inclines with the predetermined gradient.

In another example, in the state where the control panel 200 inclines with a gradient similar to the predetermined gradient, the user may move the control panel 200 to the opening position manually.

As the pushing member 410 rotates as described above, the contact projection 415 may move together with the pushing member 410. As the contact projection 415 moving as described above contacts the actuator of the sensor as illustrated in FIG. 23, the sensor may be turned on based on the movement of the actuator in contact with the contact projection 415 and generate a signal.

The driving part 420 stops operating based on the signal generated by the sensor, and accordingly, the pushing member 410 stops moving. At this time, the pushing member 410 may stop moving in the standby position, and stay in the standby position. Thus, the pushing member 410 may remain in the main body 100 without protruding out of the main body 100.

As the position of the control panel 200 changes to the opening position, the second front panel 200 hidden behind the control panel 200 is exposed forward as illustrated in FIG. 4. If the pushing member 410 keeps protruding to the front of the second front panel 130 in this state, the aesthetic qualities of the cooking appliance may deteriorate, and the control panel 200 and the pushing member 410 may collide with each other in the case where the control panel 200 returns to the closing position.

In the case where the control panel 200 and the pushing member 410 collide with each other as the control panel 200 returns to the closing position, the user may be surprised by noises caused due to the collision, and the control panel 200 or the opening module 40 may be damaged.

The control panel 200 may not move to the closing position completely.

To prevent this from happening, the pushing member 410 having pushed the control panel 200 stops and stays in the standby position, in the embodiment. To this end, the pushing member sensing part 430 may sense the position of the pushing member 410, and based on the sensing results, the operations of the pushing member 410 and the driving part 420 rotating the pushing member 410 may be controlled.

Thus, the cooking appliance in the embodiment may prevent the generation of noise or damage to the control panel 200 or the opening module 400 effectively, during the processes of opening and closing the control panel 200.

Further, for the cooking appliance in the embodiment, the exterior of the rear of the control panel 200 may ensure aesthetic qualities, regardless of the opening of the control panel 200, and the control panel 200 may be opened and closed smoothly.

### [Opening and closing structure of control panel]

Referring to FIGS. 2 to 5, the cooking appliance in the embodiment may be provided in the form of a medium-and-small-sized steam oven.

In a cooking appliance provided in the form of a medium-and-small-sized steam oven, it is difficult to obtain a space for disposing the water supply device 300 between the cavity having the cooking space and the control panel. To dispose the water supply device between the cooking space and the control panel, an up-down gap enough for the water supply device to be disposed needs to be obtained between the upper surface of the cavity and the control panel. However, the gap is hardly ensured in the medium-and-small-sized steam oven or makes the appliance larger (taller) in size.

The control panel 200 of the embodiment, provided in the cooking appliance, may serve as a cover covering the water supply device 300, in particular, the water tank 320 from the front. The control panel 200 may be provided in a way that entirely covers the electronic component space 103 where the water supply device 300 is disposed from the front.

The front surface of the electronic component space 103 may be covered by the control panel 200, but as the control panel 200 moves to the opening position, the inside of the electronic component space 103 may be open forward.

To prevent this from happening, the second front panel 130 may be provided on the front surface of the electronic component space 103. The second front panel 130 may be disposed at the front of the electronic component space 103 and serve as a cover that covers the electronic component space 103 from the front of the electronic component space 103.

Ordinarily, the first front panel 120 may be made of a metallic material that resists high temperature, while ensuring structural rigidity.

Unlike the first front panel 120, the second front panel 130 may be made of a synthetic resin such as plastics and the like. The second front panel 130 may not need to support a heavy load, and temperature around the electronic component space 103 where the second front panel 130 is disposed is less than temperature around the cooking space 101 where the first front panel 120 is disposed.

Considering this, the front surface of the electronic component space 103 may be covered by the second front panel 130 made of a material that is lightweight and cheap instead of a metal plate that is heavy and expensive.

For the water tank 320 to be withdrawn and inserted, a passage for allowing the water tank 320 to come in and out may be formed on/through the front surface of the electronic component space 103. The passage may be provided by the access hole 132 formed on the second front panel 130.

The water tank 320 may come in and out through the access hole 132, and the front surface of the water tank 320 mounted in the electronic component space 103 may be exposed to the front of the second front panel 130 through the access hole 132.

The control panel 200 may blocking the exposure of the front surface of the water tank 320 and the access hole 132, while blocking the second front panel 130 from the front thereof. The control panel 200 may swivel to the opening position to expose the access hole 132 forward, and in this state, the water tank 320 may come in and out.

The area in which the second front panel 130 is disposed is an area that extends horizontally and is easily bent and deformed and the like. The area is not exposed unless the control panel 200 is provided in a way that opens and closes the access hole 132.

In the case where the control panel 200 is provided as described with reference to the embodiment, the area where the second front panel 130 is disposed is exposed together with the access hole 132, in the case where the control panel 200 opens the access hole 132.

In the case where the second front panel 130 is integrated with the first front panel 120, a bend deformation and the like of the second front panel 130 may be exposed in the case where the control panel 200 opens the access hole 132.

Further, a structure in relation to the opening of the control panel 200, a structure in relation to the coming in and out of the water tank 320, a structure in relation to the fixation of the housing 310 and the like are provided at the second front panel 130.

If the second front panel 130 and the first front panel 120 are made of a metallic material, the structures cause a number of man hours and incur large costs, to form the second front panel 130.

To prevent this from happening, the second front panel 130 is not integrated with the first front panel 120 and is provided apart from the first front panel 120, in the embodiment.

The second front panel 130, provided as described above, may be made of a synthetic resin material such as plastics and the like, unlike the first front panel 120 made of a metallic material. Preferably, the second front panel 130 may be made of a synthetic resin material having stiffness that is stiffness or greater of a metallic material of the first front panel 120.

Since the second front panel 130 is provided as described above, the bend deformation of the second front panel 130 may be prevented, and the exterior of the second front panel 130, exposed as the control panel 200 opens the access hole 132, may look smooth and neat.

Since the second front panel 130 is provided as described above, the structure in relation to the opening of the control panel 200, a structure in relation to the coming in and out of the water tank 320, a structure in relation to the fixation of the housing 310 and the like can be molded together whenthe second front panel 130 is molded, thereby making it possible to easily manufacture the second front panel 130 and the relevant structures at low costs.

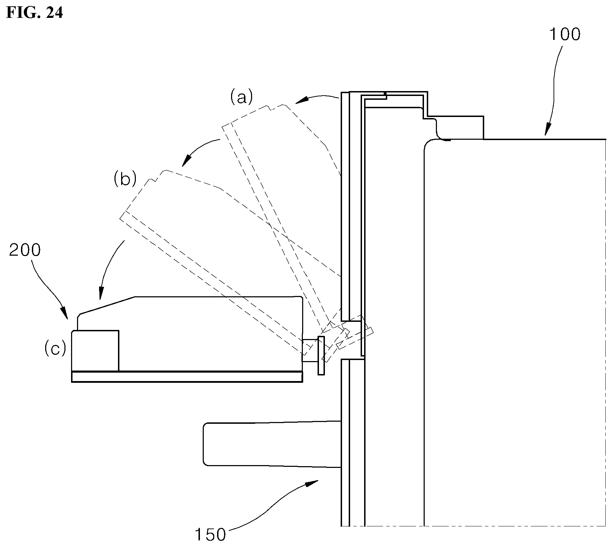

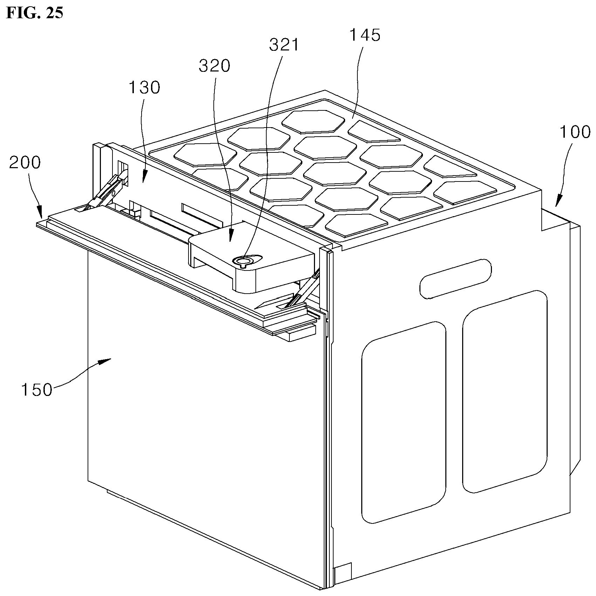

FIG. 24 is a view showing a change in the gradients of a control panel of a cooking appliance in one embodiment, and FIG. 25 is a perspective view showing a drawn state of a water tank of a cooking appliance in one embodiment.

Referring to FIGS. 22 to 24, the opening operation of the control panel 200 in the embodiment may be performed automatically.

For example, as the user presses the control panel opening and closing button, the opening module 400 may push the control panel 200 forward (see FIGS. 22 and 23). Accordingly, the control panel 200 inclines with the predetermine gradient (see FIG. 24(a)) and then move to the opening position while gradually inclining forward by using its self weight (see FIG. 24(b)).

Since the opening operation of the control panel 200 is performed automatically as described above, the cooking appliance of the embodiment may help to reduce inconvenience caused by a manual operation and the risk of injuries of the user, caused by a manual operation.

The opening operation of the control panel 200 in the embodiment is performed in a way that the control panel 200 swivels downward and is unfolded forward, and this is an important factor for enabling an automatic opening operation of the control panel 200.

The control panel 200 in the embodiment may swivel around the lower end of the control panel 200, while swiveling between the closing position and the opening position. The control panel 200 swivels around the lower end of the control panel 100 and move to the opening position.

The control panel 200 may swivel downward and move to the opening position, and be unfolded forward in/at the opening position. The control panel 200 inclines with the predetermined gradient, based on the operation of the opening module 400, and then moves to the opening position by using its self weight.

This results from the downward swivel and the forward spread of the control panel 200. In the case of a control panel 200 that swivels upward, the above-described operation of the opening module 400 may not result in the automatic opening operation of the control panel 200.

Further, the control panel 200 swiveled to the opening position and unfolded forward, as illustrated in FIGS. 24 and 25, may be disposed between the door 150 and the water tank 320.

That is, in the case where the control panel 200 swivels to the opening position and is unfolded forward, the water tank 320 may be disposed further upward than the control panel 200, while the water tank 320 is drawn from the electronic component space 103 or inserted into the electronic component space 103.

Further, in the state where the control panel 200 swivels to the opening position and is unfolded forward, the access hole 132 may be disposed further upward than the control panel 200.

Accordingly, the control pane 200 having opened the access hole 132 for allowing the water tank 320 to come in and out may be disposed further downward than the path in which the water tank 320 moves.

Since the control panel 200 is disposed further downward than the path in which the water tank 320 moves, the control panel 200 does not serve as an obstacle that covers the access hole 132 and the water tank 320, from the user's sight.

Thus, while the water tank 320 is drawn or inserted, the access hole 132 and the water tank 320 are seen well, and the user may not need to bend to see the position of the access hole 132, ensuring improvement in ease of use and safety of the cooking appliance.

Further, the control panel 200, disposed further downward than the path in which the water tank 320 moves, may support the water tank 320 from below while the water tank 320 is drawn or inserted, and guide the path of movement of the water tank 320.

Thus, the user may draw or insert the water tank 320 in a safe and convenient manner.

Further, the control panel 200, folded and disposed between the water tank 320 and the door 150 as described above, may serve as a structure that blocks between the door 150 and the water tank 320.

The control panel 200 may blocks water flowing from the water tank 320 from being dropped to the door 150 and contaminating an area around the door 150.

Further, the control panel 200 may also block heat discharged from the upper end of the door 150 and an area around the upper end of the door (e.g., the cooking space) from being delivered to the user when the user draws or insert the water tank 320.

In the embodiment, the control panel 200 comprises the input part for adjusting the operation of the cooking appliance, and the display displaying the operation state of the cooking appliance.

In another example, the control panel may be provided as a simple panel that does not comprise the input part, the display and the like. The control panel may be disposed at the front of the electronic component space 103, cover the electronic component space 103, swivel downward and move to the opening position, and be unfolded in/at the opening position, like the control panel 200 provided above as an example.

In another embodiment, the control panel may also be provided in a way that a portion of the control panel is only open. For example, the control panel may have a structure in which the control panel is divided into a plurality of areas along the lateral direction. At this time, an area covering the water tank 320 from the front of the water tank 320 only swivels downward and is unfolded forward, among the plurality of areas of the control panel, and the remaining areas may be fixed without being open.

In yet another embodiment, the control panel may have a structure in which the control panel is divided into a plurality of areas along the up-down direction, and an upper area covering the water tank 320 from the front of the water tank 320 only swivels downward and is unfolded forward, among the plurality of areas.

### [Description of reference numerals]

| | | | |
|---|---|---|---|
| 100: | Main body | 170: | Fan module |
| 101: | Cooking space | 200: | Control panel |
| 103: | Electronic component space | 250: | Hinge module |
| 104: | Vent hole | 251: | Hinge part |
| 110: | Cavity | 255: | Hinge case |
| | | 300: | Water supply device |
| | | 310: | Housing |
| 120: | First front panel | 311: | Bottom surface part |
| 122: | Exhaust opening | 311a: | Support surface |
| 123: | First protruding surface part | 311b: | Overlap surface |
| 124: | Passage hole | 311c: | First front coupling part |
| 125: | Second protruding surface part | 311d: | Second front coupling part |
| 126: | Open part | 311e: | First downward coupling part |
| 130: | Second front panel | 311f: | Second downward coupling part |
| 131: | Panel main body part | 313: | Lateral surface part |
| 131a: | First inner wall part | 315: | Nozzle |
| 131b: | Second inner wall part | 317: | Guide projection |
| 131c: | Third inner wall part | 320: | Water tank |
| 131d: | Outer wall part | 321: | Stopper |
| 132: | Access hole | 323: | Nozzle |
| 133a: | Fitting coupling part | 325: | Grip part |
| 133b: | Fixing coupling part | 325a: | Depressed surface part |
| 133c: | Reinforcement rib | 325b: | Connected surface part |
| 133d: | Connection rib | 325c: | Grip projection |
| 134: | Lowe groove part | 326: | Insertion space |
| 136: | Cam passage hole | 327: | Sliding projection |
| 140: | Upper panel | 329: | Lateral projection |
| 141: | Blocking panel part | 330: | Water tank sensing part |
| 143: | Duct part | 340: | Pump |
| 145: | Electronic component space cover | 400: | Opening module |
| 150: | Door | 410: | Pushing member |
| 155: | Handle | 415: | Contact projection |
| 160: | Convection part | 420: | Driving part |
| | | 430: | Pushing member sensing part |
| | | s: | Fastening member |

## Claims

1. A cooking appliance, comprising:
a main body (100) having a cooking space (101) therein, the cooking space (101) having an open front;
a door (150) disposed at a front of the main body (100) and configured to open and close the cooking space (101);
an electronic component space (103) separated from the cooking space (101) and disposed above the cooking space (101);
a control panel (200) disposed at a front of the electronic component space (103), wherein the control panel (200) is configured to swivel forward and downward;
**characterized in that**:
the control panel (200) is configured to swivel between a closed position in which the control panel (200) blocks or covers a front of the electronic component space (103) and an open position in which the control panel (200) unblocks or uncovers the front of the electronic component space (103);
wherein the cooking appliance further comprises an opening module (400) configured to push the control panel (200) from the closed position forward and move the control panel (200) to or toward the open position; and
wherein the opening module (400) comprises:
a pushing member (410) provided in the electronic component space (103), wherein the pushing member (410) is rotatable and is configured to push the control panel (200) forward and contacting the rear surface of the control panel (200) at least once during one rotation, or wherein the pushing member (410) is rotatable and is shaped into a cam configured to push the control panel (200) forward at least once during one rotation;
a driving part (420) for supplying power for rotating the pushing member (410); and
a pushing member sensing part (430) for controlling operation of the driving part (420), wherein the pushing member sensing part (430) is configured to sense a position of the pushing member (410), wherein the pushing member sensing part (430) comprises: a sensor configured to sense the position of the pushing member (410), or to sense the position of the pushing member (410) by contacting at least a portion of the pushing member (410); and
wherein the cooking appliance comprises a controller for controlling, based on sensing results, the operation of the driving part (420).

2. The cooking appliance of claim 1, wherein:
- the control panel (200) is configured to swivel around a swivel axis, wherein the swivel axis extends in a lateral direction; or
- the control panel (200) is configured to swivel around a swivel axis, wherein the swivel axis extends in a lateral direction and the swivel axis of the control panel (200) is positioned further downward, in an up-down direction, than a center or central lateral axis of the control panel (200); or
- the control panel (200) is configured to swivel around a swivel axis, wherein the swivel axis extends in a lateral direction and the swivel axis of the control panel (200) is positioned further downward, in an up-down direction, than a lower end of the control panel (200).

3. The cooking appliance of any of the preceding claims, wherein at the closed position a rear surface of the control panel (200) faces rearward, and at the open position the rear surface of the control panel (200) faces upward.

4. The cooking appliance of any of the preceding claims, wherein the cooking appliance comprises:
a water tank (320), wherein the water tank (320) is configured to be accommodated in the electronic component space (103) and to be drawn in and out of the electronic component space (103) through the front of the electronic component space (103); and
wherein:
at the open position of the control panel (200), the control panel (200) is disposed between the door (150) and the water tank (320) allowing the water tank (320) to be drawn in and out of the electronic component space (103) through the front of the electronic component space (103), and/or
at the closed position of the control panel (200), a rear surface of the control panel (200) is disposed facing the water tank (320), the water tank (320) accommodated in the electronic component space (103).

5. The cooking appliance of claim 4, further comprising:
- a front panel (120, 130) at a front of the electronic component space (103) and disposed between the electronic component space (103) and the control panel (200), wherein the front panel (120, 130) comprises an access hole (132) forming a passage for the water tank (320) to pass through the front panel (120, 130); or
- a front panel (120, 130) at a front of the electronic component space (103) and disposed between the electronic component space (103) and the control panel (200), wherein the front panel (120, 130) comprises an access hole (132) forming a passage for the water tank (320) to pass through the front panel (120, 130), and wherein at the closed position of the control panel (200), a rear surface of the control panel (200) is disposed facing and/or blocking the access hole (132).

6. The cooking appliance of claim 5, wherein the access hole (132) is positioned upward compared to the control panel (200), when the control panel (200) is at the open position.

7. The cooking appliance of any one of the preceding claims, wherein:
the opening module (400) is configured to push the control panel (200) from the closed position forward and move the control panel (200) to an intermediate position between the open position and the closed position, wherein at the intermediate position of the control panel (200) the control panel is in a tilted forward orientation with a predetermined gradient with respect to the front of the electronic component space (103), and
wherein the predetermined gradient is a gradient of the control panel (200) from which the control panel (200) is configured to move to the open position by self-weight.

8. The cooking appliance of any one of the preceding claims, wherein the opening module (400) is provided in the electronic component space (103).

9. The cooking appliance of any one of the preceding claims, wherein the opening module (400) further comprises a contact projection (415) protruding from the pushing member (410) and configured to rotate together with the pushing member (410),
wherein a position of the contact projection (415) is configured to change by rotation of the contact projection (415) together with the pushing member (410) to bring the contact projection (415) in contact with the sensor, and wherein the sensor is configured to generate a signal in response to the contact projection (415) contacting the sensor.

10. The cooking appliance of any one of the preceding claims, further comprising:
a hinge module (250) coupled to the control panel (200) and configured to support the control panel (200) to swivel; or
a hinge module (250) coupled to the control panel (200) and configured to support the control panel (200) to swivel and wherein the hinge module (250) is coupled to the main body (100).

11. The cooking appliance of claim 10, wherein the cooking appliance further comprises a first front panel (120) disposed between the cooking space (101) of the main body (100) and the door (150),
wherein a portion of the first front panel (120) protrudes upwards relative to an upper side of the cooking space (101), and
wherein the hinge module (250) is coupled to the main body (100) and/or the portion of the first front panel (120).

12. The cooking appliance of claim 11, wherein the hinge module (250) comprises:
a hinge part (251) coupled to the control panel and swivably supporting the control panel (200), and
a hinge case (255) for accommodating and supporting the hinge part (251), wherein the hinge case (255) is disposed in the electronic component space (103),
wherein the first front panel (120) comprises a protruding surface part (123, 125) protruding upward relative to the upper side of the cooking space (101), and
wherein a front surface of the hinge case (255) is disposed at a rear of the protruding surface part (123, 125) and/or is coupled to the protruding surface part (123, 125).

## Patentansprüche

1. Garvorrichtung, die Folgendes umfasst:
einen Hauptkörper (100), in dem ein Garraum (101) vorhanden ist, wobei der Garraum (101) eine offen Vorderseite aufweist;
eine Tür (150), die an einer Vorderseite des Hauptkörpers (100) angeordnet ist und konfiguriert ist, den Garraum (101) zu öffnen und zu schließen;
einen Raum (103) für elektronische Komponenten, der von dem Garraum (101) abgetrennt ist und oberhalb des Garraums (101) angeordnet ist;
ein Bedienfeld (200), das an einer Vorderseite des Raums (103) für elektronische Komponenten angeordnet ist, wobei das Bedienfeld (200) konfiguriert ist, nach vorne und nach unten zu schwenken;
**dadurch gekennzeichnet, dass**:
das Bedienfeld (200) konfiguriert ist, zwischen einer geschlossenen Position, in der das Bedienfeld (200) eine Vorderseite des Raums (103) für elektronische Komponenten versperrt oder bedeckt, und einer offenen Position, in der das Bedienfeld (200) die Vorderseite des Raums (103) für elektronische Komponenten freigibt oder aufdeckt, zu schwenken;
wobei die Garvorrichtung ferner ein Öffnungsmodul (400) umfasst, das konfiguriert ist, das Bedienfeld (200) aus der geschlossenen Position nach vorne zu drücken und das Bedienfeld (200) in die offene Position oder zu der offenen Position zu bewegen; und
wobei das Öffnungsmodul (400) Folgendes umfasst:
ein Druckelement (410), das in dem Raum (103) für elektronische Komponenten vorgesehen ist, wobei das Druckelement (410) gedreht werden kann und konfiguriert ist, das Bedienfeld (200) nach vorne zu drücken und während einer Drehung zumindest einmal mit der hinteren Fläche des Bedienfelds (200) in Kontakt zu kommen, oder wobei das Druckelement (410) gedreht werden kann und als ein Nocken geformt ist, der konfiguriert ist, das Bedienfeld (200) während einer Drehung zumindest einmal nach vorne zu drücken;
ein Antriebsteil (420) zur Leistungsversorgung zum Drehen des Druckelements (410); und
ein Druckelementerfassungsteil (430) zum Steuern des Betriebs des Antriebsteils (420), wobei das Druckelementerfassungsteil (430) konfiguriert ist, eine Position des Druckelements (410) zu erfassen, wobei das Druckelementerfassungsteil (430) Folgendes umfasst: einen Sensor, der konfiguriert ist, die Position des Druckelements (410) zu erfassen oder die Position des Druckelements (410) durch Herstellen eines Kontakts mit zumindest einem Abschnitt des Druckelements (410) zu erfassen; und
wobei die Garvorrichtung eine Steuereinheit zum Steuern des Betriebs des Antriebsteils (420) basierend auf den Erfassungsergebnissen umfasst.

2. Garvorrichtung nach Anspruch 1, wobei:
- das Bedienfeld (200) konfiguriert ist, um eine Schwenkachse zu schwenken, wobei sich die Schwenkachse in einer Querrichtung erstreckt; oder
- das Bedienfeld (200) konfiguriert ist, um eine Schwenkachse zu schwenken, wobei sich die Schwenkachse in einer Querrichtung erstreckt und die Schwenkachse des Bedienfelds (200) in einer Oben-Unten-Richtung weiter unten positioniert ist als ein Mittelpunkt oder eine zentrale Querachse des Bedienfelds (200); oder
- das Bedienfeld (200) konfiguriert ist, um eine Schwenkachse zu schwenken, wobei sich die Schwenkachse in einer Querrichtung erstreckt und die Schwenkachse des Bedienfelds (200) in einer Oben-Unten-Richtung weiter unten positioniert ist als ein unteres Ende des Bedienfelds (200).

3. Garvorrichtung nach einem der vorhergehenden Ansprüche, wobei in der geschlossenen Position eine hintere Fläche des Bedienfelds (200) nach hinten zeigt, und in der offenen Position die hintere Fläche des Bedienfelds (200) nach oben zeigt.

4. Garvorrichtung nach einem der vorhergehenden Ansprüche, wobei die Garvorrichtung Folgendes umfasst:
einen Wassertank (320), wobei der Wassertank (320) konfiguriert ist, in dem Raum (103) für elektronische Komponenten aufgenommen zu werden und durch die Vorderseite des Raums (103) für elektronische Komponenten in den Raum (103) für elektronische Komponenten hinein- und aus diesem herausgezogen zu werden; und
wobei
in der offenen Position des Bedienfelds (200), das Bedienfeld (200) zwischen der Tür (150) und dem Wassertank (320) angeordnet ist, sodass der Wassertank (320) durch die Vorderseite des Raums (103) für elektronische Komponenten in den Raum (103) für elektronische Komponenten hinein- und aus diesem herausgezogen werden kann, und/oder
in der geschlossenen Position des Bedienfelds (200), eine hintere Fläche des Bedienfelds (200) so angeordnet ist, dass sie dem Wassertank (320) zugewandt ist und der Wassertank (320) in dem Raum (103) für elektronische Komponenten aufgenommen ist.

5. Garvorrichtung nach Anspruch 4, die ferner Folgendes umfasst:
- eine Frontblende (120, 130) an einer Vorderseite des Raums (103) für elektronische Komponenten, die zwischen dem Raum (103) für elektronische Komponenten und dem Bedienfeld (200) angeordnet ist, wobei die Frontblende (120, 130) eine Zugangsöffnung (132) umfasst, die einen Durchgang bildet, durch den der Wassertank (320) durch die Frontblende (120, 130) hindurchgeführt werden kann; oder
- eine Frontblende (120, 130) an einer Vorderseite des Raums (103) für elektronische Komponenten, der zwischen dem Raum (103) für elektronische Komponenten und dem Bedienfeld (200) angeordnet ist, wobei die Frontblende (120, 130) eine Zugangsöffnung (132) umfasst, die einen Durchgang bildet, durch den der Wassertank (320) durch die Frontblende (120, 130) hindurchgeführt werden kann, und wobei in der geschlossenen Position des Bedienfelds (200) eine hintere Fläche des Bedienfelds (200) so angeordnet ist, dass sie der Zugangsöffnung (132) zugewandt ist und/oder diese versperrt.

6. Garvorrichtung nach Anspruch 5, wobei die Zugangsöffnung (132) im Vergleich zu dem Bedienfeld (200) weiter oben positioniert ist, wenn sich das Bedienfeld (200) in der offenen Position befindet.

7. Garvorrichtung nach einem der vorhergehenden Ansprüche, wobei:
das Öffnungsmodul (400) konfiguriert ist, das Bedienfeld (200) aus der geschlossenen Position nach vorne zu drücken und das Bedienfeld (200) in eine Zwischenposition zwischen der offenen Position und der geschlossenen Position zu bewegen, wobei in der Zwischenposition des Bedienfelds (200) das Bedienfeld (200) mit einer vorgegebenen Neigung bezüglich der Vorderseite des Raums (103) für elektronische Komponenten nach vorne geneigt angeordnet ist, und
wobei die vorgegebene Neigung einer Neigung des Bedienfelds (200) entspricht, wobei das Bedienfeld (200) konfiguriert ist, sich daraus durch das Eigengewicht in die offene Position zu bewegen.

8. Garvorrichtung nach einem der vorhergehenden Ansprüche, wobei das Öffnungsmodul (400) in dem Raum (103) für elektronische Komponenten vorgesehen ist.

9. Garvorrichtung nach einem der vorhergehenden Ansprüche, wobei das Öffnungsmodul (400) ferner einen Kontaktvorsprung (415) aufweist, der von dem Druckelement (410) vorspringt und konfiguriert ist, sich zusammen mit dem Druckelement (410) zu bewegen,
wobei eine Position des Kontaktvorsprungs (415) konfiguriert ist, sich durch Drehung des Kontaktvorsprungs (415) zusammen mit dem Druckelement (410) zu ändern, um den Kontaktvorsprung (415) mit dem Sensor in Kontakt zu bringen, und wobei der Sensor konfiguriert ist, als Antwort darauf, dass der Kontaktvorsprung (415) den Sensor kontaktiert, ein Signal zu erzeugen.

10. Garvorrichtung nach einem der vorhergehenden Ansprüche, das ferner Folgendes umfasst:
ein Scharniermodul (250), das an das Bedienfeld (200) gekoppelt ist und konfiguriert ist, das Bedienfeld (200) schwenkbar zu tragen; oder
ein Scharniermodul (250), das an das Bedienfeld (200) gekoppelt ist und konfiguriert ist, das Bedienfeld (200) schwenkbar zu tragen, und wobei das Scharniermodul (250) an den Hauptkörper (100) gekoppelt ist.

11. Garvorrichtung nach Anspruch 10, wobei die Garvorrichtung ferner eine erste Frontblende (120) umfasst, die zwischen dem Garraum (101) des Hauptkörpers (100) und der Tür (150) angeordnet ist,
wobei ein Abschnitt der ersten Frontblende (120) relativ zu einer oberen Seite des Garraums (101) nach oben vorspringt, und
wobei das Scharniermodul (250) an den Hauptkörper (100) und/oder an den Abschnitt der ersten Frontblende (120) gekoppelt ist.

12. Garvorrichtung nach Anspruch 11, wobei das Scharniermodul (250) Folgendes umfasst:
ein Scharnierteil (251), das an das Bedienfeld gekoppelt ist und das Bedienfeld (200) schwenkbar trägt, und
ein Scharniergehäuse (255) zum Aufnehmen und Tragen des Scharnierteils (251), wobei das Scharniergehäuse (255) in dem Raum (103) für elektronische Komponenten angeordnet ist,
wobei die erste Frontblende (120) ein vorspringendes Oberflächenteil (123, 125) umfasst, das relativ zu der oberen Seite des Garraums (101) nach oben vorspringt, und
wobei eine vordere Fläche des Scharniergehäuses (255) an einer Rückseite des vorspringenden Oberflächenteils (123, 125) angeordnet ist und/oder an das vorspringende Oberflächenteil (123, 125) gekoppelt ist.

## Revendications

1. Appareil de cuisson, comportant :
un corps principal (100) ayant un espace de cuisson (101) dans celui-ci, l'espace de cuisson (101) ayant un avant ouvert ;
une porte (150) disposée sur un avant du corps principal (100) et configurée pour ouvrir et fermer l'espace de cuisson (101) ;
un espace pour composants électroniques (103) séparé de l'espace de cuisson (101) et disposé au-dessus de l'espace de cuisson (101) ;
un panneau de commande (200) disposé sur un avant de l'espace pour composants électroniques (103), dans lequel le panneau de commande (200) est configuré pour pivoter vers l'avant et vers le bas ;
**caractérisé en ce que** :
le panneau de commande (200) est configuré pour pivoter entre une position fermée dans laquelle le panneau de commande (200) bloque ou recouvre un avant de l'espace pour composants électroniques (103), et une position ouverte dans laquelle le panneau de commande (200) débloque ou découvre l'avant de l'espace pour composants électroniques (103) ;
dans lequel l'appareil de cuisson comporte en outre un module d'ouverture (400) configuré pour pousser le panneau de commande (200) à partir de la position fermée vers l'avant et déplacer le panneau de commande (200) jusqu'à ou vers la position ouverte ; et
dans lequel le module d'ouverture (400) comporte :
un élément de poussée (410) agencé dans l'espace pour composants électroniques (103), dans lequel l'élément de poussée (410) peut tourner et est configuré pour pousser le panneau de commande (200) vers l'avant et entrer en contact avec la surface arrière du panneau de commande (200) au moins une fois pendant une rotation, ou dans lequel l'élément de poussée (410) peut tourner et prendre la forme d'une came configurée pour pousser le panneau de commande (200) vers l'avant au moins une fois pendant une rotation ;
une partie d'entraînement (420) pour fournir de la puissance pour faire tourner l'élément de poussée (410) ; et
une partie de détection d'élément de poussée (430) pour commander le fonctionnement de la partie d'entraînement (420), dans lequel la partie de détection d'élément de poussée (430) est configurée pour détecter une position de l'élément de poussée (410), dans lequel la partie de détection d'élément de poussée (430) comporte : un capteur configuré pour détecter la position de l'élément de poussée (410), ou pour détecter la position de l'élément de poussée (410) en venant en contact avec au moins une portion de l'élément de poussée (410) ; et
dans lequel l'appareil de cuisson comporte une commande pour commander, sur la base de résultats de détection, le fonctionnement de la partie d'entraînement (420).

2. Appareil de cuisson selon la revendication 1, dans lequel :
- le panneau de commande (200) est configuré pour pivoter autour d'un axe de pivotement, dans lequel l'axe de pivotement s'étend dans une direction latérale ; ou
- le panneau de commande (200) est configuré pour pivoter autour d'un axe de pivotement, dans lequel l'axe de pivotement s'étend dans une direction latérale et l'axe de pivotement du panneau de commande (200) est positionné plus vers le bas, dans une direction vers le haut-bas, qu'un centre ou un axe latéral central du panneau de commande (200) ; ou
- le panneau de commande (200) est configuré pour pivoter autour d'un axe de pivotement, dans lequel l'axe de pivotement s'étend dans une direction latérale et l'axe de pivotement du panneau de commande (200) est positionné plus vers le bas, dans une direction vers le haut-bas, qu'une extrémité inférieure du panneau de commande (200).

3. Appareil de cuisson selon l'une quelconque des revendications précédentes, dans lequel, en position fermée, une surface arrière du panneau de commande (200) est dirigée vers l'arrière et, en position ouverte, la surface arrière du panneau de commande (200) est dirigée vers le haut.

4. Appareil de cuisson selon l'une quelconque des revendications précédentes, dans lequel l'appareil de cuisson comporte :
un réservoir d'eau (320), dans lequel le réservoir d'eau (320) est configuré pour être reçu dans l'espace pour composants électroniques (103) et pour être tiré dans et hors de l'espace pour composants électroniques (103) par l'avant de l'espace pour composants électroniques (103) ; et
dans lequel :
en position ouverte du panneau de commande (200), le panneau de commande (200) est disposé entre la porte (150) et le réservoir d'eau (320), en permettant de tirer le réservoir d'eau (320) dans et hors de l'espace pour composants électroniques (103) par l'avant de l'espace pour composants électroniques (103), et/ou
en position fermée du panneau de commande (200), une surface arrière du panneau de commande (200) est disposée face au réservoir d'eau (320), le réservoir d'eau (320) étant reçu dans l'espace pour composants électroniques (103).

5. Appareil de cuisson selon la revendication 4, comportant en outre :
- un panneau avant (120, 130) sur un avant de l'espace pour composants électroniques (103) et disposé entre l'espace pour composants électroniques (103) et le panneau de commande (200), dans lequel le panneau avant (120, 130) comporte un trou d'accès (132) formant un passage pour faire passer le réservoir d'eau (320) à travers le panneau avant (120, 130) ; ou
- un panneau avant (120, 130) sur un avant de l'espace pour composants électroniques (103) et disposé entre l'espace pour composants électroniques (103) et le panneau de commande (200), dans lequel le panneau avant (120, 130) comporte un trou d'accès (132) formant un passage pour faire passer le réservoir d'eau (320) à travers le panneau avant (120, 130), et dans lequel, en position fermée du panneau de commande (200), une surface arrière du panneau de commande (200) est disposée en face et/ou en bloquant le trou d'accès (132).

6. Appareil de cuisson selon la revendication 5, dans lequel le trou d'accès (132) est positionné vers le haut par rapport au panneau de commande (200), lorsque le panneau de commande (200) est en position ouverte.

7. Appareil de cuisson selon l'une quelconque des revendications précédentes, dans lequel :
le module d'ouverture (400) est configuré pour pousser le panneau de commande (200) à partir de la position fermée vers l'avant et amener le panneau de commande (200) à une position intermédiaire entre la position ouverte et la position fermée, dans lequel en position intermédiaire du panneau de commande (200), le panneau de commande est dans une orientation inclinée vers l'avant avec un gradient prédéterminé par rapport à l'avant de l'espace pour composants électroniques (103), et
dans lequel le gradient prédéterminé est un gradient du panneau de commande (200) à partir duquel le panneau de commande (200) est configuré pour se déplacer jusqu'à la position ouverte par son poids propre.

8. Appareil de cuisson selon l'une quelconque des revendications précédentes, dans lequel le module d'ouverture (400) est agencé dans l'espace pour composants électroniques (103).

9. Appareil de cuisson selon l'une quelconque des revendications précédentes, dans lequel le module d'ouverture (400) comporte en outre une saillie de contact (415) faisant saillie à partir de l'élément de poussée (410) et configurée pour tourner conjointement avec l'élément de poussée (410),
dans lequel une position de la saillie de contact (415) est configurée pour changer par rotation de la saillie de contact (415) conjointement avec l'élément de poussée (410) pour mettre la saillie de contact (415) en contact avec le capteur, et dans lequel le capteur est configuré pour générer un signal en réponse à un contact de la saillie de contact (415) avec le capteur.

10. Appareil de cuisson selon l'une quelconque des revendications précédentes, comportant en outre :
un module à charnière (250) couplé au panneau de commande (200) et configuré pour supporter le panneau de commande (200) de manière à pivoter ; ou
un module à charnière (250) couplé au panneau de commande (200) et configuré pour supporter le panneau de commande (200) de manière à pivoter et dans lequel le module à charnière (250) est couplé au corps principal (100).

11. Appareil de cuisson selon la revendication 10, dans lequel l'appareil de cuisson comporte en outre un premier panneau avant (120) disposé entre l'espace de cuisson (101) du corps principal (100) et la porte (150),
dans lequel une portion du premier panneau avant (120) fait saillie vers le haut par rapport à un côté supérieur de l'espace de cuisson (101), et
dans lequel le module à charnière (250) est couplé au corps principal (100) et/ou à la portion du premier panneau avant (120).

12. Appareil de cuisson selon la revendication 11, dans lequel le module à charnière (250) comporte :
une partie de charnière (251) couplée au panneau de commande et supportant le panneau de commande (200) de manière à pouvoir pivoter, et
un boîtier de charnière (255) pour recevoir et supporter la partie de charnière (251), dans lequel le boîtier de charnière (255) est disposé dans l'espace pour composants électroniques (103),
dans lequel le premier panneau avant (120) comporte une partie de surface saillante (123, 125) faisant saillie vers le haut par rapport au côté supérieur de l'espace de cuisson (101), et
dans lequel une surface avant du boîtier de charnière (255) est disposée sur un arrière de la partie de surface saillante (123, 125) et/ou est couplée à la partie de surface saillante (123, 125).
